# EUROPEAN PATENT APPLICATION

(11) **EP 4 580 288 A1**
(43) Date of publication of application: **02.07.2025**
(21) Application number: 23870253.4
(22) Date of filing: 07.09.2023
(51) Int. Cl.: H04W 72/12, H04W 72/04

(54) **INFORMATION REPORTING METHOD AND COMMUNICATION APPARATUS**

(30) Priority: 28.09.2022 CN 202211196975
(71) Applicant: Honor Device Co., Ltd., Shenzhen, Guangdong 518040 (CN)
(72) Inventor: ZHANG, Mingzhu, Shenzhen, Guangdong 518040 (CN); SHAN, Baokun, Shenzhen, Guangdong 518040 (CN); ZHANG, Jian, Shenzhen, Guangdong 518040 (CN); ZENG, Yongbo, Shenzhen, Guangdong 518040 (CN)
(74) Representative: Thun, Clemens
(86) International application number: PCT/CN2023/117578
(87) International publication number: WO 2024/067014

(57) **Abstract**

This application discloses an information reporting method and a communication apparatus. The method includes: obtaining first information, where the first information indicates a first index or an index table corresponding to the first index; and sending, to a network device, a data format indicating the first information. The method described in this application helps determine, from a plurality of index tables, a specific table corresponding to an index.

## Description

This application claims priority to Chinese Patent Application No. 202211196975.7, entitled "INFORMATION REPORTING METHOD AND COMMUNICATION APPARATUS", and filed with the China National Intellectual Property Administration on September 28, 2022, which is incorporated herein by reference in its entirety.

### TECHNICAL FIELD

This application relates to the field of communication technologies, and in particular, to an information reporting method and a communication apparatus.

### BACKGROUND

With the development of times, people start to investigate an extended reality (extended reality, XR) technology. In an XR service, an amount of data that needs to be transmitted is large. Therefore, in a data transmission process, a large amount of data is buffered in a logical channel. A terminal device sends a buffer status report (buffer status report, BSR) to a network device, to inform the network device of the amount of data buffered in the logical channel for sending.

The buffer status report usually indicates, in a manner of an index and an index table, an amount of data included in a logical channel group. For example, Table 1 below is an index table in the prior art.

**Table 1**

| Index (index) | Buffer section (BS value) | Index (index) | Buffer section (BS value) | Index (index) | Buffer section (BS value) | Index (index) | Buffer section (BS value) |
|---|---|---|---|---|---|---|---|
| 0 | 0 | 8 | ≤ 102 | 16 | ≤ 1446 | 24 | ≤ 20516 |
| 1 | ≤ 10 | 9 | ≤ 142 | 17 | ≤ 2014 | 25 | ≤ 28581 |
| 2 | ≤ 14 | 10 | ≤ 198 | 18 | ≤ 2806 | 26 | ≤ 39818 |
| 3 | ≤ 20 | 11 | ≤ 276 | 19 | ≤ 3909 | 27 | ≤ 55474 |
| 4 | ≤ 28 | 12 | ≤ 384 | 20 | ≤ 5446 | 28 | ≤ 77284 |
| 5 | ≤ 38 | 13 | ≤ 535 | 21 | ≤ 7587 | 29 | ≤ 107669 |
| 6 | ≤ 53 | 14 | ≤ 745 | 22 | ≤ 10570 | 30 | ≤ 150000 |
| 7 | ≤ 74 | 15 | ≤ 1038 | 23 | ≤ 14726 | 31 | > 150000 |

For example, it is assumed that the buffer status report indicates that an index corresponding to a first logical channel group is 16. It can be determined based on Table 1 that a size of data buffered in the first logical channel group is greater than 1038 bytes (byte) and less than or equal to 1446 bytes.

In Table 1, aside from the index 0 and the index 1, a ratio between largest buffer sections corresponding to two adjacent indexes is 1.4. Therefore, when an index is greater, a range of a size of buffered data indicated by the index is larger. For example, when an index is 2, a size of corresponding buffered data is greater than 10 bytes and less than or equal to 14 bytes, and a length of a range section is 4 bytes. If an index is 30, a size of corresponding buffered data is greater than 107669 bytes and less than or equal to 150000 bytes, and a length of a range section is 42331 bytes. Because when an index is greater, a range of a size that is of buffered data and that is indicated by the index is larger, improper allocation may occur when the network device schedules a resource based on the BSR from the terminal device. For example, an excessive amount of resources may be allocated to the terminal device.

Therefore, in the prior art, a new index table with a finer granularity is expected to be introduced to resolve the foregoing problem. In addition, the terminal device may use different index tables based on different application scenarios. Therefore, how to distinguish an index table corresponding to an index in a plurality of tables is a problem to be urgently resolved.

### SUMMARY

This application proposes an information reporting method and a communication apparatus, to help determine, from a plurality of index tables, a specific table corresponding to an index.

According to a first aspect, this application proposes an information reporting method. The method includes: obtaining first information, where the first information indicates a first index or an index table corresponding to the first index, and the first index corresponds to one of at least two index tables; and sending, to a network device, a data format indicating the first information.

In a possible implementation, the data format is one of the following formats: a media access control control element MAC CE, a service data unit, a protocol data unit set, downlink control information, or radio resource control signaling.

The media access control control element MAC CE is a MAC CE, the service data unit is an SDU, the protocol data unit is a PDU, the downlink control information is DCI, or the radio resource control signaling is RRC signaling.

In a possible implementation, the data format includes a buffer status report.

In a possible implementation, the first information indicates a data type or the data format, and the data format indicates the first index. This implementation helps determine, from a plurality of index tables, a specific table corresponding to the first index.

In a possible implementation, the first information is the first index. This implementation helps determine, from a plurality of index tables, a specific table corresponding to the first index.

In a possible implementation, the at least two index tables include a first index table and a second index table. If the first information is greater than a first threshold, the first information indicates that the index table corresponding to the first index is the first index table. If the first information is less than or equal to the first threshold, the first information indicates that the index table corresponding to the first index is the second index table. Alternatively, the at least two index tables include a first index table and a second index table. If the first information is greater than or equal to a first threshold, the first information indicates that the index table corresponding to the first index is the first index table. If the first information is less than the first threshold, the first information indicates that the index table corresponding to the first index is the second index table.

In a possible implementation, the index table includes a correspondence between an index and second information. The at least two index tables include the first index table and the second index table. An adjacency difference less than an adjacency difference in the second index table exists in the first index table. Alternatively, an adjacency ratio less than an adjacency ratio in the second index table exists in the first index table. The adjacency difference is a difference between second information corresponding to two adjacent indexes in an index table. The adjacency ratio is a ratio between second information corresponding to two adjacent indexes in an index table.

In a possible implementation, adjacency differences in the first index table are the same.

In a possible implementation, adjacency ratios in the first index table are the same or a difference between two adjacency ratios is less than a second threshold.

In a possible implementation, the first index table satisfies one or more of the following conditions: an adjacency difference between every two indexes belonging to a first value range in the first index table is equal to a first adjacency difference; an adjacency difference between every two indexes belonging to a second value range in the first index table is equal to a second adjacency difference; an adjacency ratio between every two indexes belonging to a third value range in the first index table is equal to a first adjacency ratio; and an adjacency ratio between every two indexes belonging to a fourth value range in the first index table is equal to a second adjacency ratio. The first adjacency difference is different from the second adjacency difference, and the first adjacency ratio is different from the second adjacency ratio.

In a possible implementation, a smallest index in the first index table is 0. A largest value of second information corresponding to the index 0 is M. M is 0, or M is an integer greater than 0.

In a possible implementation, a smallest index in the first index table is N. N is an integer greater than 0. A value range of an index included in the second index table is an integer between 0 and N - 1.

In a possible implementation, the method further includes: obtaining indication information. The indication information indicates the first index table.

In a possible implementation, the indication information indicates one or more of the following parameters: a quantity of indexes in the first index table, a largest index in the first index table, a smallest index in the first index table, second information in the first index table, a first range in the first index table, an adjacency difference in the first index table, and an adjacency ratio in the first index table.

In a possible implementation, the indication information indicates a smallest index in the first index table. The method further includes: determining the first index table based on L preset buffer sections and the smallest index in the first index table. A difference between the smallest index in the first index table and a largest index in the first index table is less than or equal to L. L is an integer greater than 1.

According to a second aspect, this application proposes an information reporting method. The method includes: receiving a data format that is sent from a terminal device and that indicates first information. The first information indicates a first index or an index table corresponding to the first index, and the first index corresponds to one of at least two index tables.

In a possible implementation, the data format is one of the following formats: a media access control control element MAC CE, a service data unit, a protocol data unit, downlink control information, or radio resource control signaling.

The media access control control element MAC CE is a MAC CE, the service data unit is an SDU, the protocol data unit is a PDU, the downlink control information is DCI, or the radio resource control signaling is RRC signaling.

In a possible implementation, the data format includes a buffer status report.

In a possible implementation, the first information indicates a data type or the data format, and the data format indicates the first index.

In a possible implementation, the first information is the first index.

In a possible implementation, the at least two index tables include a first index table and a second index table. If the first information is greater than a first threshold, the first information indicates that the index table corresponding to the first index is the first index table. If the first information is less than or equal to the first threshold, the first information indicates that the index table corresponding to the first index is the second index table. Alternatively, the at least two index tables include a first index table and a second index table. If the first information is greater than or equal to a first threshold, the first information indicates that the index table corresponding to the first index is the first index table. If the first information is less than the first threshold, the first information indicates that the index table corresponding to the first index is the second index table.

In a possible implementation, the index table includes a correspondence between an index and second information. The at least two index tables include the first index table and the second index table. An adjacency difference less than an adjacency difference in the second index table exists in the first index table. Alternatively, an adjacency ratio less than an adjacency ratio in the second index table exists in the first index table. The adjacency difference is a difference between second information corresponding to two adjacent indexes in an index table. The adjacency ratio is a ratio between second information corresponding to two adjacent indexes in an index table.

In a possible implementation, adjacency differences in the first index table are the same.

In a possible implementation, adjacency ratios in the first index table are the same or a difference between two adjacency ratios is less than a second threshold.

In a possible implementation, the first index table satisfies one or more of the following conditions: an adjacency difference between every two indexes belonging to a first value range in the first index table is equal to a first adjacency difference; an adjacency difference between every two indexes belonging to a second value range in the first index table is equal to a second adjacency difference; an adjacency ratio between every two indexes belonging to a third value range in the first index table is equal to a first adjacency ratio; and an adjacency ratio between every two indexes belonging to a fourth value range in the first index table is equal to a second adjacency ratio. The first adjacency difference is different from the second adjacency difference, and the first adjacency ratio is different from the second adjacency ratio.

In a possible implementation, a smallest index in the first index table is 0. A largest value of second information corresponding to the index 0 is M. M is 0, or M is an integer greater than 0.

In a possible implementation, a smallest index in the first index table is N. N is an integer greater than 0. A value range of an index included in the second index table is an integer between 0 and N - 1.

In a possible implementation, the method further includes: sending indication information to the terminal device. The indication information indicates the first index table.

In a possible implementation, the indication information indicates one or more of the following parameters: a quantity of indexes in the first index table, a largest index in the first index table, a smallest index in the first index table, second information in the first index table, a first range in the first index table, an adjacency difference in the first index table, and an adjacency ratio in the first index table.

According to a third aspect, this application proposes an information reporting method. The method includes: obtaining third information. The third information indicates an index table that is of a first index and that corresponds to a first granularity, and the index table that is of the first index and that corresponds to the first granularity is from one of at least two index tables.

In a possible implementation, the first granularity is one of the following granularities: a logical channel group, a logical channel, a protocol data unit set, and a quality of service flow.

In a possible implementation, the third information is related to a bitmap.

In a possible implementation, the third information is configuration information related to the first granularity, and an information parameter of the configuration information is an identifier of the first granularity.

In a possible implementation, the index table includes a correspondence between an index and second information. The at least two index tables include the first index table and the second index table. An adjacency difference less than an adjacency difference in the second index table exists in the first index table. Alternatively, an adjacency ratio less than an adjacency ratio in the second index table exists in the first index table. The adjacency difference is a difference between second information corresponding to two adjacent indexes in an index table. The adjacency ratio is a ratio between second information corresponding to two adjacent indexes in an index table.

In a possible implementation, adjacency differences in the first index table are the same.

In a possible implementation, adjacency ratios in the first index table are the same or a difference between two adjacency ratios is less than a second threshold.

In a possible implementation, the first index table satisfies one or more of the following conditions: an adjacency difference between every two indexes belonging to a first value range in the first index table is equal to a first adjacency difference; an adjacency difference between every two indexes belonging to a second value range in the first index table is equal to a second adjacency difference; an adjacency ratio between every two indexes belonging to a third value range in the first index table is equal to a first adjacency ratio; and an adjacency ratio between every two indexes belonging to a fourth value range in the first index table is equal to a second adjacency ratio. The first adjacency difference is different from the second adjacency difference, and the first adjacency ratio is different from the second adjacency ratio.

In a possible implementation, a smallest index in the first index table is 0. A largest value of second information corresponding to the index 0 is M. M is 0, or M is an integer greater than 0.

In a possible implementation, a smallest index in the first index table is N. N is an integer greater than 0. A value range of an index included in the second index table is an integer between 0 and N - 1.

In a possible implementation, the method further includes: obtaining indication information. The indication information indicates the first index table.

In a possible implementation, the indication information indicates one or more of the following parameters: a quantity of indexes in the first index table, a largest index in the first index table, a smallest index in the first index table, second information in the first index table, a first range in the first index table, an adjacency difference in the first index table, and an adjacency ratio in the first index table.

In a possible implementation, the indication information indicates a smallest index in the first index table. The method further includes: determining the first index table based on L preset buffer sections and the smallest index in the first index table. A difference between the smallest index in the first index table and a largest index in the first index table is less than or equal to L. L is an integer greater than 1.

In a possible implementation, the method further includes: if an index table that is of the first index and that corresponds to a target granularity is the first index table, and a target information value of the target granularity is less than or equal to a second threshold, a data format does not need to be reported currently, and the data format is reported after the target information value of the target granularity is greater than a third threshold.

According to a fourth aspect, this application proposes an information reporting method. The method includes: sending third information to a terminal device. The third information indicates an index table of a first index corresponding to a first granularity, and the index table is from one of at least two index tables.

In a possible implementation, the first granularity is one of the following granularities: a logical channel group, a logical channel, a protocol data unit, and a quality of service flow.

In a possible implementation, the third information is related to a bitmap.

In a possible implementation, the third information is configuration information related to the first granularity, and an information parameter of the configuration information is an identifier of the first granularity.

In a possible implementation, the index table includes a correspondence between an index and second information. The at least two index tables include the first index table and the second index table. An adjacency difference less than an adjacency difference in the second index table exists in the first index table. Alternatively, an adjacency ratio less than an adjacency ratio in the second index table exists in the first index table. The adjacency difference is a difference between second information corresponding to two adjacent indexes in an index table. The adjacency ratio is a ratio between second information corresponding to two adjacent indexes in an index table.

In a possible implementation, adjacency differences in the first index table are the same.

In a possible implementation, adjacency ratios in the first index table are the same or a difference between two adjacency ratios is less than a second threshold.

In a possible implementation, the first index table satisfies one or more of the following conditions: an adjacency difference between every two indexes belonging to a first value range in the first index table is equal to a first adjacency difference; an adjacency difference between every two indexes belonging to a second value range in the first index table is equal to a second adjacency difference; an adjacency ratio between every two indexes belonging to a third value range in the first index table is equal to a first adjacency ratio; and an adjacency ratio between every two indexes belonging to a fourth value range in the first index table is equal to a second adjacency ratio. The first adjacency difference is different from the second adjacency difference, and the first adjacency ratio is different from the second adjacency ratio.

In a possible implementation, a smallest index in the first index table is 0. A largest value of second information corresponding to the index 0 is M. M is 0, or M is an integer greater than 0.

In a possible implementation, a smallest index in the first index table is N. N is an integer greater than 0. A value range of an index included in the second index table is an integer between 0 and N - 1.

In a possible implementation, the method further includes: sending indication information to the terminal device. The indication information indicates the first index table.

In a possible implementation, the indication information indicates one or more of the following parameters: a quantity of indexes in the first index table, a largest index in the first index table, a smallest index in the first index table, second information in the first index table, a first range in the first index table, an adjacency difference in the first index table, and an adjacency ratio in the first index table.

According to a fifth aspect, this application proposes an information reporting method. The method includes: obtaining fourth information. The fourth information indicates a first index table.

In a possible implementation, the fourth information indicates one or more of the following parameters: a quantity of indexes in the first index table, a largest index in the first index table, a smallest index in the first index table, second information in the first index table, a first range in the first index table, an adjacency difference in the first index table, and an adjacency ratio in the first index table.

In a possible implementation, a terminal device determines one or more index tables. When two index tables are determined, the two index tables include the first index table and a second index table. An adjacency difference less than an adjacency difference in the second index table exists in the first index table. Alternatively, an adjacency ratio less than an adjacency ratio in the second index table exists in the first index table. The adjacency difference is a difference between second information corresponding to two adjacent indexes in an index table. The adjacency ratio is a ratio between second information corresponding to two adjacent indexes in an index table.

In a possible implementation, adjacency differences in the first index table are the same.

In a possible implementation, adjacency ratios in the first index table are the same or a difference between two adjacency ratios is less than a second threshold.

In a possible implementation, the first index table satisfies one or more of the following conditions: an adjacency difference between every two indexes belonging to a first value range in the first index table is equal to a first adjacency difference; an adjacency difference between every two indexes belonging to a second value range in the first index table is equal to a second adjacency difference; an adjacency ratio between every two indexes belonging to a third value range in the first index table is equal to a first adjacency ratio; and an adjacency ratio between every two indexes belonging to a fourth value range in the first index table is equal to a second adjacency ratio. The first adjacency difference is different from the second adjacency difference, and the first adjacency ratio is different from the second adjacency ratio.

**In** a possible implementation, a smallest index in the first index table is 0. A largest value of second information corresponding to the index 0 is M. M is 0, or M is an integer greater than 0.

In a possible implementation, a smallest index in the first index table is N. N is an integer greater than 0. A value range of an index included in the second index table is an integer between 0 and N - 1.

In a possible implementation, the fourth information is sent from a network device.

According to a sixth aspect, this application proposes an information reporting method. The method includes: sending fourth information to a terminal device. The fourth information indicates a first index table.

In a possible implementation, the indication information indicates one or more of the following parameters: a quantity of indexes in the first index table, a largest index in the first index table, a smallest index in the first index table, second information in the first index table, a first range in the first index table, an adjacency difference in the first index table, and an adjacency ratio in the first index table.

According to a seventh aspect, this application provides a communication apparatus. The communication apparatus may be a terminal device or a network device, an apparatus of the terminal device or the network device, or an apparatus that can match and be used with the terminal device or the network device. The communication device may alternatively be a chip system. The communication apparatus may perform the method in any one of the first aspect, the second aspect, the third aspect, the fourth aspect, the fifth aspect, or the sixth aspect, and the possible implementations thereof. A function of the communication apparatus may be implemented by hardware, or may be implemented by hardware executing corresponding software. The hardware or software includes one or more units or modules corresponding to the foregoing function. The unit or module may be software and/or hardware. For an operation performed by the communication apparatus and beneficial effects, refer to the beneficial effects corresponding to the method in the first aspect, the second aspect, the third aspect, the fourth aspect, the fifth aspect, or the sixth aspect, and the possible implementations thereof. Details are not described herein again.

According to an eighth aspect, this application provides a communication apparatus. The communication apparatus includes a processor. When the processor invokes a computer program in a memory, the method in the first aspect, the second aspect, the third aspect, the fourth aspect, the fifth aspect, or the sixth aspect, and the possible implementations thereof is implemented.

According to a ninth aspect, this application provides a communication apparatus. The communication apparatus includes a processor and a memory. The processor and the memory are coupled. The processor is configured to implement the method in the first aspect, the second aspect, the third aspect, the fourth aspect, the fifth aspect, or the sixth aspect, and the possible implementations thereof.

According to a tenth aspect, the application provides a communication apparatus. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method in the first aspect, the second aspect, the third aspect, the fourth aspect, the fifth aspect, or the sixth aspect, and the possible implementations thereof through a logic circuit or by executing code instructions.

According to an eleventh aspect, the application provides a computer-readable storage medium, having a computer program or instructions stored therein. When the computer program or instructions are executed by a communication apparatus, the method in any one of the first aspect, the second aspect, the third aspect, the fourth aspect, the fifth aspect, or the sixth aspect, and the possible implementations thereof is implemented.

According to a twelfth aspect, the application provides a computer program product including instructions. When a computer reads and executes the computer program product, the computer is enabled to perform the method in the first aspect, the second aspect, the third aspect, the fourth aspect, the fifth aspect, or the sixth aspect, and the possible implementations thereof.

### BRIEF DESCRIPTION OF DRAWINGS

FIG. 1 is a schematic diagram of an architecture of a communication system according to an embodiment of this application;
FIG. 2 is a schematic flowchart of an information reporting method according to an embodiment of this application;
FIG. 3 is a schematic diagram of a format of a short BSR according to an embodiment of this application;
FIG. 4 is a schematic diagram of a format of an extended short BSR according to an embodiment of this application;
FIG. 5 is a schematic diagram of a format of a long BSR according to an embodiment of this application;
FIG. 6 is a schematic diagram of a format of an extended long BSR according to an embodiment of this application;
FIG. 7 is a schematic diagram of a format of a new long BSR according to an embodiment of this application;
FIG. 8 is a schematic flowchart of another information reporting method according to an embodiment of this application;
FIG. 9 is a schematic flowchart of another information reporting method according to an embodiment of this application;
FIG. 10 is a schematic diagram of a structure of a communication apparatus according to an embodiment of this application;
FIG. 11 is a schematic diagram of a structure of another communication apparatus according to an embodiment of this application; and
FIG. 12 is a schematic diagram of a structure of a chip according to an embodiment of this application.

### DESCRIPTION OF EMBODIMENTS

Specific embodiments of this application are further described in detail below with reference to the accompanying drawings.

The terms "first", "second", and the like in the specification, the claims, and the accompanying drawings of this application are intended to distinguish between different objects, instead of describing a particular sequence. In addition, the terms "including", "having", or any other variant thereof are intended to cover a non-exclusive inclusion. For example, a process, a method, a system, a product, or a device including a series of steps or units is not limited to the listed steps or units, but instead, optionally includes steps or units that are not listed, or optionally includes other steps or units inherent to the process, method, product, or device.

Reference in this specification to "an embodiment" means that a specified feature, structure, or characteristic described with reference to the embodiment may be included in at least one embodiment of this application. Appearances of the phrase in various locations in this specification are not necessarily all referring to a same embodiment, nor are separate or alternative embodiments mutually exclusive of another embodiment. It is explicitly and implicitly understood by a person skilled in the art that embodiments described in this specification may be combined with another embodiment.

In this application, "at least one (item)" means one or more, "a plurality" means two or more, and "at least two (items)" means two or three and more. The term "and/or" describes a correspondence relationship between associated objects and represents that three associations may exist. For example, "A and/or B" may indicate that only A exists, only B exists, and both A and B exist. A and B may be singular or plural. The character "/" usually indicates an "or" relationship between the associated objects. "At least one of the following items" or a similar expression means any combination of these items, including a single item or any combination of a plurality of items. For example, at least one of a, b, or c may represent a, b, c, "a and b", "a and c", "b and c", or "a, b, and c", where a, b, and c may be singular or plural.

A system architecture in the embodiments of this application is introduced below.

To facilitate understanding of the technical solutions of the embodiments of this application, the system architecture of a method provided in the embodiments of this application is briefly described below. It may be understood that the system architecture described in the embodiments of this application is to illustrate the technical solutions of the embodiments of this application more clearly, and does not constitute a limitation on the technical solutions provided in the embodiments of this application.

The technical solutions of the embodiments of this application may be applied to various communication systems, for example, a satellite communication system or a conventional mobile communication system. The satellite communication system may be merged with the conventional mobile communication system (namely, a terrestrial communication system). The communication system may be, for example, a wireless local area network (wireless local area network, WLAN) communication system, a wireless fidelity (wireless fidelity, WiFi) system, a long term evolution (long term evolution, LTE) system, an LTE frequency division duplex (frequency division duplex, FDD) system, an LTE time division duplex (time division duplex, TDD) system, a 5th generation (5th generation, 5G) system or a new radio (new radio, NR) system, a 6th generation (6th generation, 6G) system, and another future communication system. A communication system in which a plurality of wireless technologies are converged is further supported. For example, the technical solutions may alternatively be applied to a system in which a non-terrestrial network (non-terrestrial network, NTN) is converged with a terrestrial mobile communication system, such as an uncrewed aerial vehicle, a satellite communication system, or communication in a high altitude platform station (high altitude platform station, HAPS).

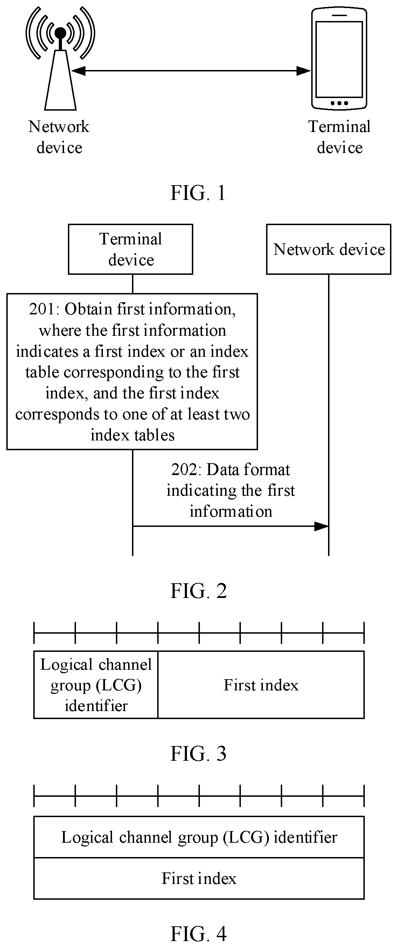

FIG. 1 is an example of a communication system to which the embodiments of this application are applicable. The communication system includes at least one network device, and at least one terminal device. One terminal device and one network device are used as an example in FIG. 1. The terminal device is connected to the network device and can perform data communication. Certainly, a quantity of terminal devices and a quantity of network devices in FIG. 1 are merely example, and there may be fewer or more terminal devices and network devices.

The network device in this application may be an evolved NodeB (evolved Node B, eNB or eNodeB) in LTE, a base station in a 5G network, another base station evolved in the future, a broadband network gateway (broadband network gateway, BNG), an aggregation switch, a non-3rd generation partnership project (3rd generation partnership project, 3GPP) access device, or the like. This is not specifically limited in the embodiments of this application. For example, the base station in the embodiments of this application may include base stations of various forms, such as a transmission and reception point (transmitting and receiving point, TRP), a macro base station, a micro base station (also referred to as a small station), a relay station, an access point, a next-generation base station (gNodeB, gNB), a transmission point (transmitting point, TP), or a mobile switch center, or may be a device or the like that takes on a wireless access function in device-to-device (Device-to-Device, D2D), vehicle-to-everything (vehicle-to-everything, V2X), machine-to-machine (machine-to-machine, M2M), or Internet of things (Internet of Things) communication. This is not specifically limited in the embodiments of this application.

In the embodiments of this application, an apparatus configured to implement a function of the network device may be a network device, or may be an apparatus that can support the network device in implementing the function, for example, a chip system or a combination device or component that can implement the function of the network device. The apparatus may be mounted in the network device. In the technical solutions provided in the embodiments of this application, an example in which the apparatus configured to implement the function of the network device is the network device is used to describe the technical solutions provided in the embodiments of this application.

The terminal device mentioned in the embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication apparatus, a user agent, or a user apparatus. The terminal device may alternatively be a satellite phone, a cellular phone, a smartphone, a wireless data card, a wireless modem, a machine-type communication apparatus, may be a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a communication apparatus carried on a high-altitude aircraft, a wearable device, an uncrewed aerial vehicle, a robot, a terminal in device-to-device communication (device-to-device, D2D), a terminal in vehicle-to-everything (vehicle to everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In addition, in the embodiments of this application, the terminal device may be an apparatus configured to implement a function of the terminal device, or may be an apparatus that can support the terminal device in implementing the function, for example, a chip system. The apparatus may be mounted in the terminal device. For example, the terminal device may alternatively be a vehicle detector or a sensor in a gas station.

Based on the foregoing descriptions of the communication system, a background of the embodiments of this application is introduced below.

With the development of times, people start to investigate an extended reality (extended reality, XR) technology. In an XR service, an amount of data that needs to be transmitted is large. Therefore, in a data transmission process, a large amount of data is buffered in a logical channel. A terminal device sends a buffer status report (buffer status report, BSR) to a network device, to inform the network device of the amount of data buffered in the logical channel for sending.

The buffer status report usually indicates, in a manner of an index and an index table, an amount of data included in a logical channel group. For example, Table 1 below is an index table in the prior art.

**Table 1**

| Index (index) | Buffer section (BS value) | Index (index) | Buffer section (BS value) | Index (index) | Buffer section (BS value) | Index (index) | Buffer section (BS value) |
|---|---|---|---|---|---|---|---|
| 0 | 0 | 8 | ≤ 102 | 16 | ≤ 1446 | 24 | ≤ 20516 |
| 1 | ≤ 10 | 9 | ≤ 142 | 17 | ≤ 2014 | 25 | ≤ 28581 |
| 2 | ≤ 14 | 10 | ≤ 198 | 18 | ≤ 2806 | 26 | ≤ 39818 |
| 3 | ≤ 20 | 11 | ≤ 276 | 19 | ≤ 3909 | 27 | ≤ 55474 |
| 4 | ≤ 28 | 12 | ≤ 384 | 20 | ≤ 5446 | 28 | ≤ 77284 |
| 5 | ≤ 38 | 13 | ≤ 535 | 21 | ≤ 7587 | 29 | ≤ 107669 |
| 6 | ≤ 53 | 14 | ≤ 745 | 22 | ≤ 10570 | 30 | ≤ 150000 |
| 7 | ≤ 74 | 15 | ≤ 1038 | 23 | ≤ 14726 | 31 | > 150000 |

For example, it is assumed that the buffer status report indicates that an index corresponding to a first logical channel group is 16. It can be determined based on Table 1 that a size of data buffered in the first logical channel group is greater than 1038 bytes (byte) and less than or equal to 1446 bytes.

In Table 1, aside from the index 0 and the index 1, a ratio between largest buffer sections corresponding to two adjacent indexes is 1.4. Therefore, when an index is greater, a range of a size of buffered data indicated by the index is larger. For example, when an index is 2, a size of corresponding buffered data is greater than 10 bytes and less than or equal to 14 bytes, and a length of a range section is 4 bytes. If an index is 30, a size of corresponding buffered data is greater than 107669 bytes and less than or equal to 150000 bytes, and a length of a range section is 42331 bytes. Because when an index is greater, a range of a size that is of buffered data and that is indicated by the index is larger, improper allocation may occur when the network device schedules a resource based on the BSR from the terminal device. For example, an excessive amount of resources may be allocated to the terminal device.

Therefore, in the prior art, a new index table with a finer granularity is expected to be introduced to resolve the foregoing problem. However, a definition and a type of the index table are not determined. In addition, the terminal device may use different index tables based on different application scenarios. Therefore, how to distinguish an index table corresponding to an index in a plurality of tables is a problem to be urgently resolved.

To distinguish an index table corresponding to an index, an embodiment of this application proposes an information reporting method. Refer to FIG. 2. As shown in FIG. 2, the information reporting method includes the following step 201 and step 202. An execution body of the method shown in FIG. 2 may be a terminal device and a network device, or may be a chip in the terminal device or a chip in the network device. In FIG. 2, an example in which the execution body of the method is the terminal device and the network device is used for description. The execution body of the method is not limited in this embodiment of this application.

201: The terminal device obtains first information, where the first information indicates a first index or an index table corresponding to the first index, and the first index corresponds to one of at least two index tables.

In this embodiment of this application, the first index indicates second information of a first granularity. The index table includes a correspondence between an index and the second information. That the first index corresponds to one of at least two index tables may be understood as that the first index is an index from one of the at least two index tables. The second information that is indicated by the first index and that is of the first granularity is determined based on the first index and the index table corresponding to the first index. Alternatively, the second information may be a largest value, a smallest value, or an intermediate value in a section in an index table, a length of a section, or a largest value, a smallest value, or an intermediate value in an index table. The at least two index tables include a first index table and a second index table. It needs to be noted that the first index table and the second index table are merely examples provided in this application. The at least two index tables may alternatively include a plurality of index tables such as a third index table. A quantity of index tables is not limited in this embodiment of this application. In the following content, the first index table and the second index table are used as an example. A quantity of index tables included in the at least two index tables is not limited in this embodiment of this application. Optionally, the at least two index tables include an index table that is a table already defined in the current 3GPP R17 standard V17.2.0, for example, Table 1 in the foregoing descriptions.

In a possible implementation, the first granularity may be one of the following granularities: a logical channel (Logical Channel, LCH), a logical channel group (logical channel group, LCG), a protocol data unit set (Protocol Data Unit set, PDU set), and a quality of service flow (Qos Flow). Optionally, the first index is an index carried in a buffer status report (buffer status report, BSR), the first granularity is the LCG, and the second information is a buffer section. In this implementation, the first index indicates a buffer section corresponding to a size of data buffered in the LCG. Specifically, the buffer section corresponding to the size of the data buffered in the LCG may be determined based on the first index and the table corresponding to the first index.

A format of the BSR may be classified into a short BSR format and a long BSR format.

FIG. 3 is a schematic diagram of a format of a short BSR according to an embodiment of this application. The short BSR includes only one LCG identifier and a first index corresponding to the LCG. The short BSR includes one byte. A field length corresponding to the LCG identifier is three bits. A field length corresponding to the first index is five bits.

FIG. 4 is a schematic diagram of a format of an extended short BSR according to an embodiment of this application. The extended short BSR includes only one LCG identifier and a first index corresponding to the LCG. The extended short BSR includes two bytes. A field length corresponding to the LCG identifier is eight bits. A field length corresponding to the first index is eight bits.

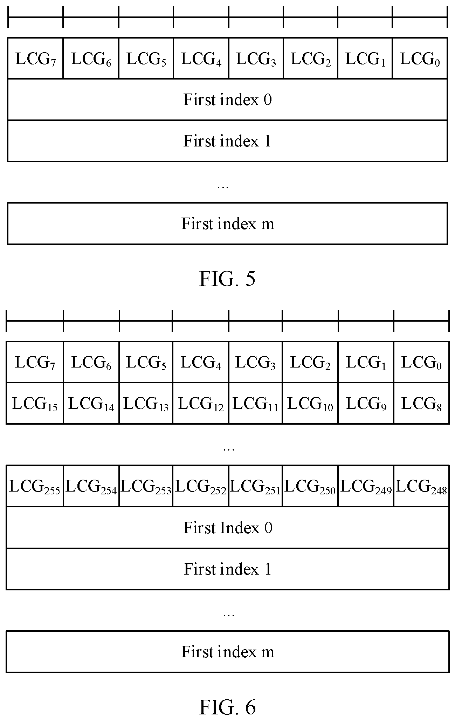

FIG. 5 is a schematic diagram of a format of a long BSR according to an embodiment of this application. The long BSR may indicate first indexes corresponding to eight LCGs. The long BSR includes m + 1 bytes. Afield length corresponding to the first index is eight bits. m is a quantity of LCGs whose corresponding bit is the first bit in the BSR, and a value range of m is from 1 to 8. If a bit corresponding to an LCGᵢ is the first bit, it indicates that the BSR includes a first index corresponding to the LCGᵢ. If the bit corresponding to the LCGᵢ is a second bit, it indicates that the BSR does not include the first index corresponding to the LCGᵢ. A value range of I is from 0 to 7. The first bit is 0 and the second bit is 1. Alternatively, the first bit is 1 and the second bit is 0. For example, it is assumed that, in a long BSR, bits corresponding to an LCG₀ to an LCG₃ are the first bits, and bits corresponding to an LCG₄ to an LCG₇ are the second bits. It may be understood that a first index 0 indicates a buffer section corresponding to a size of data buffered in the LCG₀, a first index 1 indicates a buffer section corresponding to a size of data buffered in the LCG₁, a first index 2 indicates a buffer section corresponding to a size of data buffered in the LCG2, and a first index 3 indicates a buffer section corresponding to a size of data buffered in the LCG₃. In this long BSR, first indexes corresponding to the LCG₄ to the LCG₇ are not included.

FIG. 6 is a schematic diagram of a format of an extended long BSR according to an embodiment of this application. The extended long BSR may indicate first indexes corresponding to 256 LCGs. The long BSR includes m + 32 bytes. A field length corresponding to the first index is eight bits. m is a quantity of LCGs whose corresponding bit is the first bit in the BSR, and a value range of m is from 1 to 256. Similar to that in the format of the long BSR, if a bit corresponding to an LCGᵢ is the first bit, it indicates that the BSR includes a first index corresponding to the LCGᵢ. If the bit corresponding to the LCGᵢ is a second bit, it indicates that the BSR does not include the first index corresponding to the LCGᵢ. A value range of I is from 0 to 255. The first bit is 0 and the second bit is 1. Alternatively, the first bit is 1 and the second bit is 0.

The first index indicates a buffer section corresponding to a size of data buffered in the LCG. Specifically, the buffer section corresponding to the size of the data buffered in the LCG may be determined based on the first index and the table corresponding to the first index. For example, Table 2 and Table 3 below are used as an example.

**Table 2**

| Index (index) | Buffer section (BS value) |
|---|---|
| 0 | 0 |
| 1 | ≤ 2 |
| 2 | ≤ 4 |
| 3 | ≤ 6 |

**Table 3**

| Index (index) | Buffer section (BS value) |
|---|---|
| 0 | 0 |
| 1 | ≤ 10 |
| 2 | ≤ 14 |
| 3 | ≤ 20 |

It is assumed that the first information indicates that a first index A is 2, and a table corresponding to the first index A is Table 2 in the two foregoing tables. It may be determined that the first index A indicates that a size of data buffered in a logical channel group is in a buffer section from two bytes to four bytes. It is assumed that the first information indicates that a first index B is 2, and a table corresponding to the first index B is Table 3 in the two foregoing tables. It may be determined that the first index A indicates that a size of data buffered in a logical channel group is in a buffer section from 10 bytes to 14 bytes.

In a possible implementation, the first information may indicate, in the following manner, the first index or the index table corresponding to the first index, to determine that the first index corresponds to one of the at least two index tables. It should be noted that the first information may alternatively indicate, in another manner, the first index or the index table corresponding to the first index. This is not limited in this embodiment of this application.

### 1. The first information indicates the first index.

Manner 1: The first information indicates a data type or the data format. The data format may include the first index, or include information indicating the first index. Optionally, the first information is a logical channel identifier (logical channel identifier, LCID). For example, the at least two index tables include a first index table and a second index table. When an LCID corresponding to the data format is a first LCID, the data format may be determined based on the first LCID. The data format includes the first index, or includes the information indicating the first index. The table corresponding to the first index is the first index table. Therefore, it may be determined, based on the first LCID, that the index table corresponding to the first index is the first index table. When the LCID corresponding to the data format is a second LCID, the data format may be determined based on the second LCID. The data format includes the first index, or includes the information about the first index. The table corresponding to the first index is the second index table. Therefore, it may be determined, based on the second LCID, that the index table corresponding to the first index is the second index table. This implementation helps determine, from a plurality of index tables, a specific table corresponding to the first index.

Manner 2: The first information is the first index. In this implementation, the index table corresponding to the first index may be determined based on a value of the first index. For example, the at least two index tables include a first index table and a second index table. If the first information is greater than a first threshold, the first information indicates that the index table corresponding to the first index is the first index table. If the first information is less than or equal to the first threshold, the first information indicates that the index table corresponding to the first index is the second index table. Alternatively, if the first information is greater than or equal to a first threshold, the first information indicates that the index table corresponding to the first index is the first index table. If the first information is less than the first threshold, the first information indicates that the index table corresponding to the first index is the second index table. The first index table and the second index table may form one index table, or may be two different index tables. Optionally, the first threshold may be configured or predefined by the network device. This implementation helps determine a specific table corresponding to the first index.

### 2. The first information indicates the index table corresponding to the first index.

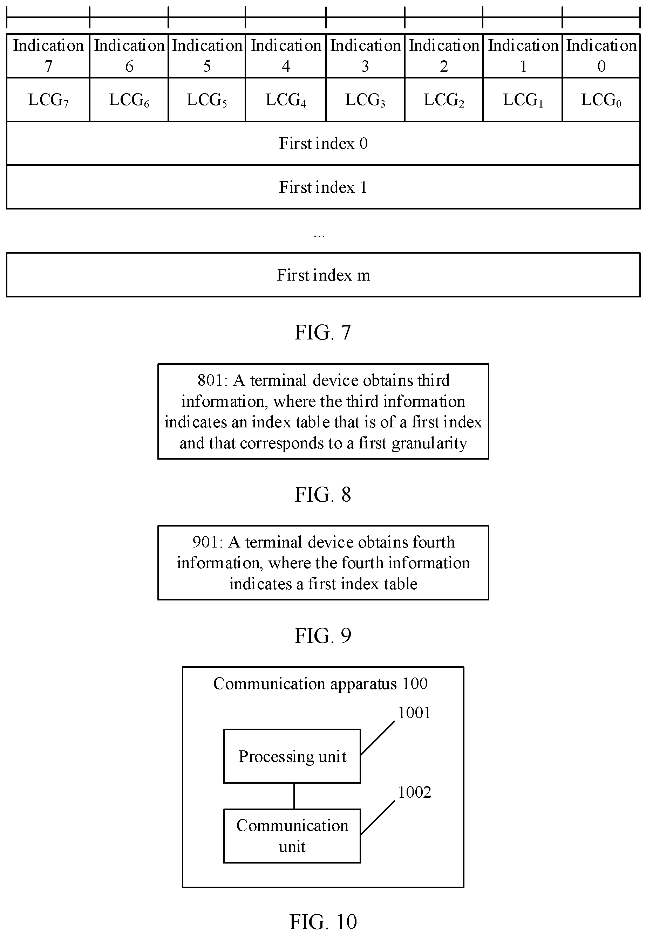

Manner 3: The first information indicates the index table corresponding to the first index. Optionally, the first information may be indication information newly defined in this application. The indication information directly indicates the index table corresponding to the first index. Further optionally, the first index is an index carried in a BSR. The first information is an indication in a data format carrying the BSR. The first information indicates the index table corresponding to the first index. For example, FIG. 7 is a schematic diagram of a format of a new long BSR according to an embodiment of this application. The long BSR includes eight indications. The first information is the indication. An indication i indicates an index table corresponding to a first index corresponding to an LCGi, and a value range of i is from 0 to 7. It is assumed that the at least two index tables include a first index table and a second index table. If a bit indicated by the indication i is the first bit, it indicates that the index table corresponding to the first index corresponding to the LCGᵢ is the first index table. If the bit indicated by the indication i is a second bit, it indicates that the index table corresponding to the first index corresponding to the LCGᵢ is the second index table. The first bit is 0 and the second bit is 1. Alternatively, the first bit is 1 and the second bit is 0. A format of a new BSR may alternatively be defined for the format of the extended long BSR according to the method. The new BSR includes 256 indications. A specific implementation is the same as that of the long BSR, and details are not described herein. In this embodiment of this application, only how the indication information indicates the index table corresponding to the first index when there are two index tables is described. If there are a plurality of index tables, similarly, the indication information may also indicate, according to a similar method, the index table corresponding to the first index. This is not limited in this embodiment of this application. This implementation helps determine, from a plurality of index tables, a specific table corresponding to the first index.

Based on the foregoing descriptions of the first information, the following mainly describes the index table.

In a possible implementation, the at least two index tables include the first index table and the second index table. An adjacency difference less than an adjacency difference in the second index table exists in the first index table. Alternatively, an adjacency ratio less than an adjacency ratio in the second index table exists in the first index table. The adjacency difference is a difference between second information corresponding to two adjacent indexes in an index table. The adjacency ratio is a ratio between second information corresponding to two adjacent indexes in an index table.

That an adjacency difference less than an adjacency difference in the second index table exists in the first index table may be understood as that the first index table includes a plurality of adjacency differences, the second index table includes a plurality of adjacency differences, and at least one of the plurality of adjacency differences in the first index table is less than an adjacency difference in the second index table. Similarly, that an adjacency ratio less than an adjacency ratio in the second index table exists in the first index table may be understood as that the first index table includes a plurality of adjacency ratios, the second index table includes a plurality of adjacency ratios, and at least one of the plurality of adjacency ratios in the first index table is less than an adjacency ratio in the second index table.

Optionally, when the first index is an index carried in a BSR, the first granularity is an LCG. The second information may be understood as a largest value, a smallest value, or an intermediate value in a buffer section corresponding to the first index, or a length of a buffer section. An example in which the second information is the largest value in the buffer section is used. The adjacency difference may be understood as a difference between largest values in buffer sections corresponding to two adjacent indexes in the index table. In this case, the adjacency difference may alternatively be understood as lengths of the buffer sections corresponding to the two indexes. The adjacency ratio may be understood as a ratio of a largest value in a buffer section corresponding to a second index to a largest value in a buffer section corresponding to a third index in the index table. The second index and the third index are two adjacent indexes in the index table, and a value of the second index is greater than a value of the third index.

For example, it is assumed that, in an index table, a buffer section corresponding to an index 1 is (10, 20], and a buffer section corresponding to an index 2 is (20, 30]. The index 1 and the index 2 are two adjacent indexes. In the index table, an adjacency difference is a difference 10 between the largest values in the buffer sections corresponding to the index 1 and the index 2.

For another example, it is assumed that, in an index table, a buffer section corresponding to an index 1 is (10, 20], and a buffer section corresponding to an index 2 is (20, 40]. The index 1 and the index 2 are two adjacent indexes. In the index table, an adjacency ratio is a ratio 2 between the largest values in the buffer sections corresponding to the index 1 and the index 2.

That an adjacency difference less than an adjacency difference in the second index table exists in the first index table or that an adjacency ratio less than an adjacency ratio in the second index table exists in the first index table may be understood as that a granularity of a buffer section in the first index table is less than a granularity of a buffer section in the second index table, or that a step value of a buffer section in the first index table is less than a step value of a buffer section in the second index table.

For example, Table 4 and Table 5 below are used as an example.

**Table 4**

| Index (index) | Buffer section (BS value) |
|---|---|
| 0 | 0 |
| 1 | ≤ 2 |
| 2 | ≤ 4 |
| 3 | ≤ 6 |

**Table 5**

| Index (index) | Buffer section (BS value) |
|---|---|
| 0 | 0 |
| 1 | ≤ 3 |
| 2 | ≤ 6 |
| 3 | ≤ 9 |

It is assumed that the first index table is Table 4, and the second index table is Table 5. It may be learned through calculation that an adjacency difference in the first index table is 2, and an adjacency difference in the second index table is 3. Therefore, it can be learned that the adjacency difference in the first index table is less than the adjacency difference in the second index table. In this case, if the index table corresponding to the first index is the first index table, an indicated range of a size of buffered data is smaller than that in the second index table.

For example, Table 6 and Table 7 below are used as an example.

**Table 6**

| Index (index) | Buffer section (BS value) |
|---|---|
| 0 | ≤ 1 |
| 1 | ≤ 2 |
| 2 | ≤ 4 |
| 3 | ≤ 8 |

**Table 7**

| Index (index) | Buffer section (BS value) |
|---|---|
| 0 | ≤ 1 |
| 1 | ≤ 3 |
| 2 | ≤ 9 |
| 3 | ≤ 27 |

It is assumed that the first index table is Table 6, and the second index table is Table 7. It may be learned through calculation that an adjacency ratio in the first index table is 2, and an adjacency ratio in the second index table is 3. Therefore, it can be learned that the adjacency ratio in the first index table is less than the adjacency ratio in the second index table. In this case, if the index table corresponding to the first index is the first index table, an indicated range of a size of buffered data is smaller than that in the second index table.

In this embodiment of this application, an example in which all adjacency differences in the first index table are less than adjacency differences in the second index table and an example in which all adjacency ratios in the first index table are less than adjacency ratios in the second index table are used. It needs to be noted that only a part of the adjacency differences in the first index table may alternatively be less than the adjacency differences in the second index table, or only a part of the adjacency ratios in the first index table may alternatively be less than the adjacency ratios in the second index table. A related example may be similarly obtained based on the foregoing example, and is not described in this embodiment of this application herein.

Further optionally, the second index table may be a table already defined in the current 3GPP R17 standard V17.2.0, for example, Table 1 in the foregoing descriptions. The first index table is an index table that is newly defined in this embodiment of this application and whose granularity is less than that of the second index table.

Based on the first index table described above, the granularity of the first index table is introduced below.

In a possible implementation, adjacency differences in the first index table are the same. The adjacency difference is a difference between second information corresponding to two adjacent indexes in an index table. Optionally, when the second information is a buffer section, the adjacency difference may be understood as a difference between largest values in buffer sections corresponding to two adjacent indexes in the index table. Alternatively, the adjacency difference may be understood as lengths of the buffer sections corresponding to the two indexes. For example, it is assumed that a buffer section corresponding to an index 2 is (2, 4]. A length of the buffer section is 2, and an adjacency difference is correspondingly 2. Because the largest value of the buffer section corresponding to the index 2 is 4, it may be determined that a buffer section corresponding to an index 3 is (4, 6].

In another possible implementation, adjacency ratios between second information corresponding to two adjacent indexes in the first index table are the same or a difference between two adjacency ratios is less than a second threshold. The adjacency ratio is a ratio between second information corresponding to two adjacent indexes in an index table. That a difference between two adjacency ratios is less than a second threshold, and the second threshold is approximately 0 may be understood as that all the adjacency ratios in the first index table are approximately the same. Optionally, when the second information is a buffer section, the adjacency ratio may be understood as a ratio between largest values in buffer sections corresponding to two adjacent indexes in the index table. For example, it is assumed that a buffer section corresponding to an index 1 is (1, 2], and a buffer section corresponding to an index 2 is (2, 4]. It may be learned through calculation that an adjacency ratio is 2, and the largest value in the buffer section corresponding to the index 2 is 4. Therefore, it may be determined that a buffer section corresponding to an index 3 is (4, 8].

In another possible implementation, the first index table satisfies one or more of the following conditions: a condition 1: an adjacency difference between every two indexes belonging to a first value range in the first index table is equal to a first adjacency difference; a condition 2: an adjacency difference between every two indexes belonging to a second value range in the first index table is equal to a second adjacency difference; a condition 3: an adjacency ratio between every two indexes belonging to a third value range in the first index table is equal to a first adjacency ratio; and a condition 4: an adjacency ratio between every two indexes belonging to a fourth value range in the first index table is equal to a second adjacency ratio. The first adjacency difference is different from the second adjacency difference, and the first adjacency ratio is different from the second adjacency ratio. Optionally, when the second information is a buffer section, the adjacency difference may be understood as a difference between largest values in buffer sections corresponding to two adjacent indexes in the index table. Alternatively, the adjacency difference may be understood as lengths of the buffer sections corresponding to the two indexes. The adjacency ratio may be understood as a ratio between largest values in buffer sections corresponding to two adjacent indexes in the index table. Further optionally, the value range may be an index range or a buffer section range.

An example in which the first index table satisfies the condition 1 and the condition 3 is used below for description.

For example, the value range is an index range, the first value range is an index 1 to an index 3, and the third value range is an index 4 to an index 10. An index 2 and the index 3 both belong to the first value range. The first adjacency difference is 2. It is assumed that a buffer section corresponding to the index 2 is (2, 4]. Because the largest value in the buffer section corresponding to the index 2 is 4, it may be determined that a buffer section corresponding to the index 3 is (4, 6]. An index 4, an index 5, and an index 6 all belong to the third value range. The first adjacency ratio is 2. It is assumed that a buffer section corresponding to the index 4 is (6, 12], a buffer section corresponding to the index 5 is (12, 24], and the largest value in the buffer section corresponding to the index 5 is 24. Therefore, it may be determined that a buffer section corresponding to the index 6 is (24, 48]. A corresponding index table is as follows.

**Table 8**

| Index (index) | Buffer section (BS value) | Index (index) | Buffer section (BS value) |
|---|---|---|---|
| 1 | ≤ 2 | 4 | ≤ 12 |
| 2 | ≤ 4 | 5 | ≤ 24 |
| 3 | ≤ 6 | 6 | ≤ 48 |

For another example, the value range is a buffer section range, the first value range is being less than 0 to 5, the third value range is being greater than or equal to 5 to 20, the first adjacency difference is 1, and the first adjacency ratio is 2. It is determined, based on the first value range and the first adjacency difference, that buffer ranges of the second information are (0, 1], (1, 2], (2, 3], (3, 4], and (4, 5]. Buffer ranges (5, 10], (10, 20], and (20, 40] of the second information are determined based on the third value range and the first adjacency ratio. In this case, a corresponding index table is as follows.

**Table 9**

| Index (index) | Buffer section (BS value) | Index (index) | Buffer section (BS value) |
|---|---|---|---|
| 0 | ≤ 1 | 4 | ≤ 5 |
| 1 | ≤ 2 | 5 | ≤ 10 |
| 2 | ≤ 3 | 6 | ≤ 20 |
| 3 | ≤ 4 | 7 | ≤ 40 |

An example in which the first index table satisfies the condition 1 and the condition 2 is used below for description. As an example, the value range is a buffer section range. The following Table 10 is used as an example.

**Table 10**

| Index (index) | Buffer section (BS value) | Index (index) | Buffer section (BS value) |
|---|---|---|---|
| 0 | 0 | 4 | ≤ 12 |
| 1 | ≤ 2 | 5 | ≤ 16 |
| 2 | ≤ 4 | 6 | ≤ 20 |
| 3 | ≤ 8 | 7 | ≤ 24 |

It is assumed that the first index table is Table 8, the first value range is being less than or equal to 8, the second value range is being greater than 8, the first adjacency difference is 2, and the second adjacency difference is 4. It can be learned based on Table 8 that sizes of buffer sections corresponding to an index 0 to an index 3 are all less than or equal to 8. Therefore, in the index 0 to the index 3, a difference between largest values in buffer sections corresponding to two adjacent indexes is 2. For example, a largest value of a buffer section corresponding to an index 1 is 2, a largest value of a buffer section corresponding to an index 2 is 4, and a difference between the largest values is 2. It can be learned based on Table 8 that sizes of buffer sections corresponding to an index 4 to an index 7 are all greater than 8. Therefore, in the index 4 to the index 7, a difference between largest values in buffer sections corresponding to two adjacent indexes is 4. For example, a largest value of a buffer section corresponding to an index 5 is 16, a largest value of a buffer section corresponding to an index 6 is 20, and a difference between the largest values is 4. When the value range is an index range, same content may be similarly obtained based on the foregoing example. Details are not described herein again.

An example in which the first index table satisfies the condition 3 and the condition 4 is used below for description. As an example, the value range is a buffer section range. The following Table 11 is used as an example.

**Table 11**

| Index (index) | Buffer section (BS value) | Index (index) | Buffer section (BS value) |
|---|---|---|---|
| 0 | ≤ 1 | 4 | ≤ 12 |
| 1 | ≤ 2 | 5 | ≤ 36 |
| 2 | ≤ 4 | 6 | ≤ 108 |
| 3 | ≤ 8 | 7 | ≤ 324 |

It is assumed that the first index table is Table 9, the third value range is being less than or equal to 8, the fourth value range is being greater than 8, the first adjacency ratio is 2, and the second adjacency ratio is 3. It can be learned based on Table 9 that sizes of buffer sections corresponding to an index 0 to an index 3 are all less than or equal to 8. Therefore, in the index 0 to the index 3, a ratio between largest values in buffer sections corresponding to two adjacent indexes is 2. For example, a largest value of a buffer section corresponding to an index 1 is 2, a largest value of a buffer section corresponding to an index 2 is 4, and a ratio between the largest values is 2. It can be learned based on Table 9 that sizes of buffer sections corresponding to an index 4 to an index 7 are all greater than 8. Therefore, in the index 4 to the index 7, a ratio between largest values in buffer sections corresponding to two adjacent indexes is 4. For example, a largest value of a buffer section corresponding to an index 5 is 36, a largest value of a buffer section corresponding to an index 6 is 108, and a ratio between the largest values is 3.

Optionally, the first value range may alternatively be understood as an index satisfying a first condition, the second value range may alternatively be understood as an index satisfying a second condition, the third value range may alternatively be understood as an index satisfying a third condition, and the fourth value range may alternatively be understood as an index satisfying a fourth condition. It needs to be noted that the first condition, the second condition, the third condition, and the fourth condition described above may be any condition. For example, the first condition is that an index value is greater than a preset threshold. This is not limited in this embodiment of this application.

Based on the foregoing descriptions of the first index table, the index included in the first index table and the second information are described below.

In a possible implementation, a smallest index in the first index table is 0. A largest value of second information corresponding to the index 0 is M. M is 0, or M is an integer greater than 0. Optionally, the second information is a buffer section.

For example, it is assumed that the first index table is Table 12. It can be learned that a largest value in a buffer section corresponding to the index 0 is 0. If the first index is 0, and the first index is from the first index table, a buffer size that is indicated by the first index and that corresponds to an LCG is 0.

**Table 12**

| Index (index) | Buffer section (BS value) |
|---|---|
| 0 | 0 |
| 1 | ≤ 2 |
| 2 | ≤ 4 |
| 3 | ≤ 8 |

For another example, it is assumed that the first index table is Table 13. It can be learned that a largest value in a buffer section corresponding to the index 0 is 1. If the first index is 0, and the first index is from the first index table, a buffer size that is indicated by the first index and that corresponds to an LCG is less than or equal to 1.

**Table 13**

| Index (index) | Buffer section (BS value) |
|---|---|
| 0 | ≤ 1 |
| 1 | ≤ 2 |
| 2 | ≤ 4 |
| 3 | ≤ 8 |

In another possible implementation, a smallest index in the first index table is N. N is an integer greater than 0. A value range of an index included in the second index table is an integer between 0 and N - 1. Optionally, the second information is a buffer section. With reference to the foregoing descriptions of the first information, this implementation may be combined with the foregoing described method in which the first information is the first index. To be specific, if the first information is greater than a first threshold, the first information indicates that the index table corresponding to the first index is the first index table. If the first information is less than or equal to the first threshold, the first information indicates that the index table corresponding to the first index is the second index table. The first threshold is N - 1. It needs to be additionally noted that this implementation may alternatively be combined with another method described in the first information. This is not limited in this embodiment of this application.

For example, it is assumed that the second index table is Table 14, and the first index table is Table 15.

**Table 14**

| Index (index) | Buffer section (BS value) |
|---|---|
| 0 | 0 |
| 1 | ≤ 2 |
| 2 | ≤ 4 |
| 3 | ≤ 6 |

**Table 15**

| Index (index) | Buffer section (BS value) |
|---|---|
| 4 | ≤ 8 |
| 5 | ≤ 10 |
| 6 | ≤ 12 |
| 7 | ≤ 14 |

The first threshold is set to 3. If the first index is 2, because the first index is less than 3, it may be determined, based on the second index table, namely, Table 12, that a size of a buffer section corresponding to the first index is (2, 4]. If the first index is 6, because the first index is greater than 3, it may be determined, based on the first index table, namely, Table 13, that the size of the buffer section corresponding to the first index is (10, 12].

Further optionally, the first index table and the second index table may alternatively be combined into a third index table. Assuming that a largest index in the first index table is P, a value range of an index in the third index table is from 0 to P. The foregoing example in which it is assumed that the second index table is Table 14, and the first index table is Table 15 is used. The first index table and the second index table may be combined into the third index table, for example, Table 16 below.

**Table 16**

| Index (index) | Buffer section (BS value) | Index (index) | Buffer section (BS value) |
|---|---|---|---|
| 0 | 0 | 4 | ≤ 8 |
| 1 | ≤ 2 | 5 | ≤ 10 |
| 2 | ≤ 4 | 6 | ≤ 12 |
| 3 | ≤ 6 | 7 | ≤ 14 |

Based on the foregoing descriptions of the first index table, in this embodiment of this application, the first index table may be predefined, or may be configured by the network device. How the terminal device determines the first index table is mainly introduced below.

In a possible implementation, the terminal device obtains indication information. Optionally, the indication information is sent by the network device. Specifically, the network device configures the first index table and sends the indication information to the terminal device. The indication information indicates the first index table. Correspondingly, the terminal device receives the indication information from the network device. The terminal device may determine the first index table based on the indication information. Based on this implementation, the network device can flexibly adjust content in the first index table based on a change in a current network load, so that the terminal device can more accurately indicate the corresponding second information based on the first index table and the first index.

Optionally, the indication information may be the first index table, or the indication information indicates one or more of the following parameters: a quantity of indexes in the first index table, a largest index in the first index table, a smallest index in the first index table, second information in the first index table, a first range in the first index table, an adjacency difference in the first index table, and an adjacency ratio in the first index table. The first range may be one or more of the first value range, the second value range, the third value range, and the fourth value range that are described above. The terminal device may determine the first index table based on the one or more parameters indicated by the indication information. The one or more parameters indicated by the indication information are configured by the network device, or predefined.

Further optionally, the indication information may be the foregoing described one or more parameters in the first index table, or may be some other information. The terminal device determines a parameter in the first index table based on the other information, and then determines the first index table. For example, the indication information is a threshold, and the smallest index in the first index table may be determined based on the threshold. Specifically, the terminal device determines that the smallest index in the first index table is an index value corresponding to a buffer section to which the limitation belongs in the second index table. For example, the second information is a buffer section. It is assumed that the second index table is Table 17.

**Table 17**

| Index (index) | Buffer section (BS value) |
|---|---|
| 0 | 0 |
| 1 | ≤ 2 |
| 2 | ≤ 4 |
| 3 | ≤ 8 |

The terminal device determines that the threshold is three bytes. In Table 15, a buffer section corresponding to three bytes is (2, 4], and an index value corresponding to the buffer section (2, 4] is 2. In this case, it may be determined that the smallest index in the first index table is 2. Further optionally, it is assumed that the largest index in the first index table is equal to a largest index in the second index table, and the network device already presets five buffer sections, which are respectively (4, 6], (6, 8], (8, 10], (10, 12], and (12, 14]. Therefore, two index tables that are suitable for the current first index table may be determined from the five buffer sections. Therefore, it may be learned that the first index table is 18.

**Table 18**

| Index (index) | Buffer section (BS value) |
|---|---|
| 2 | ≤ 4 |
| 3 | ≤ 6 |

In a possible implementation, the indication information may not be sent by the network device. Specifically, the indication information may be predefined, or determined by the terminal device by sensing a current network environment or another parameter, or sent by another device. This is not limited in this embodiment of this application.

202: The terminal device sends, to the network device, a data format indicating the first information. Correspondingly, the network device receives, from the terminal device, the data format indicating the first information.

In this embodiment of this application, the data format may be one of the following formats: a media access control element (Media Access Control Control Element, MAC CE), a service data unit (Service Data Unit, SDU), a PDU, downlink control information (Downlink Control Information, DCI), or radio resource control (Radio Resource Control, RRC) signaling. In addition, the data format may alternatively be another format. This is not limited in this embodiment of this application. Optionally, the da includes a BSR. Because the first information indicates the first index, the table corresponding to the first index may be determined from the at least two index tables based on the first information. The method described in this application helps determine, from a plurality of index tables, a specific table corresponding to the first index.

To distinguish an index table corresponding to an index, an embodiment of this application further proposes an information reporting method. Refer to FIG. 8. As shown in FIG. 8, the information reporting method includes the following step 801. An execution body of the method shown in FIG. 8 may be a terminal device and a network device, or may be a chip in the terminal device or a chip in the network device. In FIG. 8, an example in which the execution body of the method is the terminal device and the network device is used for description. The execution body of the method is not limited in this embodiment of this application.

801: A terminal device obtains third information, where the third information indicates an index table that is of a first index and that corresponds to a first granularity.

In this embodiment of this application, the first index indicates second information of the first granularity. The index table includes a correspondence between an index and the second information. Third information is sent by a network device to the terminal device, and is for determining the index table that is of the first index and that corresponds to the first granularity. The index table that is of the first index and that corresponds to the first granularity is one of at least two index tables. Specifically, the first index is an index from one of the at least two index tables. The second information that is indicated by the first index and that is of the first granularity is determined based on the first index and the index table corresponding to the first index. Alternatively, the second information may be a largest value, a smallest value, or an intermediate value in a section in an index table, a length of a section, or a largest value, a smallest value, or an intermediate value in an index table. The at least two index tables include a first index table and a second index table. It needs to be noted that the first index table and the second index table are merely examples provided in this application. The at least two index tables may alternatively include a plurality of index tables such as a third index table. A quantity of index tables is not limited in this embodiment of this application. In the following content, the first index table and the second index table are used as an example. A quantity of index tables included in the at least two index tables is not limited in this embodiment of this application. Optionally, the at least two index tables include an index table that is a table already defined in the current 3GPP R17 standard V17.2.0, for example, Table 1 in the foregoing descriptions.

In a possible implementation, the third information may be sent by the network device, predefined, or obtain in another manner. How the terminal device obtains the third information is not limited in this embodiment of this application.

In a possible implementation, the first granularity may be one of the following granularities: an LCH, an LCG, a PDU set, and a Qos Flow. Optionally, the first index is an index in a BSR. Further optionally, the first granularity is an LCG, and the second information is a buffer section. In this implementation, the first index indicates a buffer section corresponding to a size of data buffered in the LCG. The buffer section corresponding to the size of the data buffered in the LCG may be determined based on the first index and the table corresponding to the first index. For a format of the BSR, refer to the descriptions in step 201. Details are not described again in this embodiment of this application.

In a possible implementation, the third information may indicate, in the following two manners, the index table that is of the first index and that corresponds to the first granularity. It needs to be noted that the third information may alternatively indicate, in another manner, the index table that is of the first index and that corresponds to the first granularity. This is not limited in this embodiment of this application.

Manner 1: The third information is related to a bitmap. In an implementation, the third information includes configuration information related to the first granularity. An information parameter of the configuration information is in one-to-one correspondence to a bit in the bitmap. Optionally, the manner 1 is implemented in a manner of bit mapping. The configuration information at the first granularity includes a plurality of information parameters. The plurality of information parameters include a first information parameter and a second information parameter. The bitmap includes a first bit and a second bit. A bitmap corresponding to the first information parameter is the first bit, and a bitmap corresponding to the second information parameter is the second bit. An index table that corresponds to the first information parameter and that is of the first index is the first index table, and an index table that corresponds to the second information parameter and that is of the first index is the second index table Optionally, the first bit is 0 and the second bit is 1. Alternatively, the first bit is 1 and the second bit is 0. For example, the first granularity as an LCG. The configuration information includes four information parameters (an LCG 1, an LCG 2, an LCG 3, and an LCG 4). For example, it is assumed that the first bit is 0 and the second bit is 1. The bitmap is represented as 0011. The bitmap includes four bits, and the four bits sequentially correspond to the LCG 1, the LCG 2, the LCG 3, and the LCG 4 respectively. Bits corresponding to the LCG 1 and the LCG 2 are 1, and are the first bits. Corresponding index tables of the first index are the first index tables. Bits corresponding to the LCG 3 and the LCG 4 are 0, and are the second bits. Corresponding index tables of the first index are the second index tables.

Manner 2: The third information is configuration information related to the first granularity, and an information parameter of the configuration information is an identifier of the first granularity. The third information indicates an index table that is of the first index and that corresponds to the information parameter in the configuration information. Optionally, the third information includes a configuration parameter related to an LCG granularity. The information parameter is an LCG ID. The configuration parameter includes (an LCG 2 and an LCG 3). Eight LCGs are configured in a network, which are (an LCG 1 to an LCG 8) in total. In this implementation, the third information is an LCG configuration, and includes an LCG ID. An index table that is of the first index and that corresponds to the LCG ID configured in the third information is the first index table. It may be understood that, aside from the LCG ID indicated in the third information, an index table that is of the first index and that corresponds to another LCG ID configured in the network is not the first index table, and may be the second index table or another index table.

Based on the foregoing descriptions of the first information, the following mainly describes the index table. It needs to be noted that descriptions of the index table are the same as the descriptions in step 201. In this embodiment of this application, only brief descriptions are provided. For a specific implementations and example, refer to the descriptions in step 201.

In a possible implementation, the at least two index tables include the first index table and the second index table. An adjacency difference less than an adjacency difference in the second index table exists in the first index table. Alternatively, an adjacency ratio less than an adjacency ratio in the second index table exists in the first index table. The adjacency difference is a difference between second information corresponding to two adjacent indexes in an index table. The adjacency ratio is a ratio between second information corresponding to two adjacent indexes in an index table.

That an adjacency difference less than an adjacency difference in the second index table exists in the first index table may be understood as that the first index table includes a plurality of adjacency differences, the second index table includes a plurality of adjacency differences, and at least one of the plurality of adjacency differences in the first index table is less than an adjacency difference in the second index table. Similarly, that an adjacency ratio less than an adjacency ratio in the second index table exists in the first index table may be understood as that the first index table includes a plurality of adjacency ratios, the second index table includes a plurality of adjacency ratios, and at least one of the plurality of adjacency ratios in the first index table is less than an adjacency ratio in the second index table.

Optionally, when the first index is an index in a BSR, the first granularity is an LCG. The second information may be understood as a largest value, a smallest value, or an intermediate value in a buffer section corresponding to the first index. An example in which the second information is the largest value in the buffer section is used. The adjacency difference may be understood as a difference between largest values in buffer sections corresponding to two adjacent indexes in the index table. In this case, the adjacency difference may alternatively be understood as lengths of the buffer sections corresponding to the two indexes. The adjacency ratio may be understood as a ratio of a largest value in a buffer section corresponding to a second index to a largest value in a buffer section corresponding to a third index in the index table. The second index and the third index are two adjacent indexes in the index table, and a value of the second index is greater than a value of the third index.

In this embodiment of this application, an example in which all adjacency differences in the first index table are less than adjacency differences in the second index table and an example in which all adjacency ratios in the first index table are less than adjacency ratios in the second index table are used. It needs to be noted that only a part of the adjacency differences in the first index table may alternatively be less than the adjacency differences in the second index table, or only a part of the adjacency ratios in the first index table may alternatively be less than the adjacency ratios in the second index table. A related example may be similarly obtained based on the foregoing example, and is not described in this embodiment of this application herein.

Further optionally, the second index table may be a table already defined in the current 3GPP R17 standard V17.2.0, for example, Table 1 in the foregoing descriptions. The first index table is an index table that is newly defined in this embodiment of this application and whose granularity is less than that of the second index table.

Based on the first index table described above, the granularity of the first index table is introduced below. Descriptions of the first index table are the same as the descriptions in step 201. In this embodiment of this application, only brief descriptions are provided. For a specific implementations and example, refer to the descriptions in step 201.

In a possible implementation, adjacency differences in the first index table are the same. The adjacency difference is a difference between second information corresponding to two adjacent indexes in an index table. Optionally, when the second information is a buffer section, the adjacency difference may be understood as a difference between largest values in buffer sections corresponding to two adjacent indexes in the index table. Alternatively, the adjacency difference may be understood as lengths of the buffer sections corresponding to the two indexes.

In another possible implementation, adjacency ratios between second information corresponding to two adjacent indexes in the first index table are the same or a difference between two adjacency ratios is less than a second threshold. The adjacency ratio is a ratio between second information corresponding to two adjacent indexes in an index table. That a difference between two adjacency ratios is less than a second threshold, and the second threshold is close to 0 may be understood as that all the adjacency ratios in the first index table are approximately the same. Optionally, when the second information is a buffer section, the adjacency ratio may be understood as a ratio between largest values in buffer sections corresponding to two adjacent indexes in the index table.

In another possible implementation, the first index table satisfies one or more of the following conditions: a condition 1: an adjacency difference between every two indexes belonging to a first value range in the first index table is equal to a first adjacency difference; a condition 2: an adjacency difference between every two indexes belonging to a second value range in the first index table is equal to a second adjacency difference; a condition 3: an adjacency ratio between every two indexes belonging to a third value range in the first index table is equal to a first adjacency ratio; and a condition 4: an adjacency ratio between every two indexes belonging to a fourth value range in the first index table is equal to a second adjacency ratio. The first adjacency difference is different from the second adjacency difference, and the first adjacency ratio is different from the second adjacency ratio. Optionally, when the second information is a buffer section, the adjacency difference may be understood as a difference between largest values in buffer sections corresponding to two adjacent indexes in the index table. Alternatively, the adjacency difference may be understood as lengths of the buffer sections corresponding to the two indexes. The adjacency ratio may be understood as a ratio between largest values in buffer sections corresponding to two adjacent indexes in the index table. Further optionally, the value range may be an index range or a buffer section range.

Optionally, the first value range may alternatively be understood as an index satisfying a first condition, the second value range may alternatively be understood as an index satisfying a second condition, the third value range may alternatively be understood as an index satisfying a third condition, and the fourth value range may alternatively be understood as an index satisfying a fourth condition. It needs to be noted that the first condition, the second condition, the third condition, and the fourth condition described above may be any condition. For example, the first condition is that an index value is greater than a preset threshold. This is not limited in this embodiment of this application.

Based on the foregoing descriptions of the first index table, the index included in the first index table and the second information are described below. Descriptions of the index and the second information are the same as the descriptions in step 201. In this embodiment of this application, only brief descriptions are provided. For a specific implementations and example, refer to the descriptions in step 201. Details are not described again in this embodiment of this application.

In a possible implementation, a smallest index in the first index table is 0. A largest value of second information corresponding to the index 0 is M. M is 0, or M is an integer greater than 0.

In another possible implementation, a smallest index in the first index table is N. N is an integer greater than 0. A value range of an index included in the second index table is an integer between 0 and N - 1.

Based on the foregoing descriptions of the first index table, in this embodiment of this application, the first index table may be predefined, or may be configured by the network device. How the terminal device determines the first index table is mainly introduced below. A method of configuring the first index table is the same as the descriptions in step 201. In this embodiment of this application, only brief descriptions are provided. For a specific implementations and example, refer to the descriptions in step 201. Details are not described again in this embodiment of this application.

In a possible implementation, the terminal device obtains indication information. Optionally, the indication information is sent by the network device. Specifically, the network device configures the first index table and sends the indication information to the terminal device. The indication information indicates the first index table. Correspondingly, the terminal device receives the indication information from the network device. The terminal device may determine the first index table based on the indication information. Based on this implementation, the network device can flexibly adjust content in the first index table based on a change in a current network load, so that the terminal device can more accurately indicate the corresponding second information based on the first index table and the first index.

Optionally, the indication information may be the first index table, or the indication information indicates one or more of the following parameters: a quantity of indexes in the first index table, a largest index in the first index table, a smallest index in the first index table, second information in the first index table, a first range in the first index table, an adjacency difference in the first index table, and an adjacency ratio in the first index table. The first range may be one or more of the first value range, the second value range, the third value range, and the fourth value range that are described above. The terminal device may determine the first index table based on the one or more parameters indicated by the indication information. The one or more parameters indicated by the indication information are configured by the network device, or predefined.

Further optionally, the indication information may be the foregoing described one or more parameters in the first index table, or may be some other information. The terminal device determines a parameter in the first index table based on the other information, and then determines the first index table. For example, the indication information is a threshold, and the smallest index in the first index table may be determined based on the threshold. Specifically, the terminal device determines that the smallest index in the first index table is an index value corresponding to a buffer section to which the limitation belongs in the second index table.

In a possible implementation, the indication information may not be sent by the network device. Specifically, the indication information may be predefined, or determined by the terminal device by sensing a current network environment or another parameter, or sent by another device. This is not limited in this embodiment of this application.

Based on the foregoing described method, in a possible implementation, the method further includes: The terminal device generates the data format based on the third information, where the data format includes the first index corresponding to the first granularity. The terminal device sends the data format to the network device. Correspondingly, the network device receives the data format. The data format may be one of the following formats: MAC CE, an SDU, a PDU, DCI, or RRC signaling. Optionally, the data format includes a BSR. In addition, the data format may alternatively be another format. This is not limited in this embodiment of this application.

With reference to the foregoing described first index table, optionally, if an index table that is of the first index and that corresponds to a target granularity is the first index table, and a target information value of the target granularity is less than or equal to a second threshold, a data format does not need to be reported currently, and the data format is reported after the target information value of the target granularity is greater than a third threshold. Further optionally, the target granularity is a target LCG, the target information value is a size of data buffered in the target LCG, and the data format includes a BSR. For example, it is assumed that an index table corresponding to an LCG 1 is the first index table. The terminal device currently needs to report a BSR to the network device, but a size of data buffered in the LCG 1 is less than the second threshold. In this case, the reported BSR does not need to include a first index corresponding to the LCG 1, and until the size of the data buffered in the LCG 1 is greater than the third threshold, the terminal device reports, to the network device by using the BSR, the first index corresponding to the LCG 1. This implementation helps reduce overheads of the data format.

With the current development of times, an amount of data that needs to be transmitted by people is larger. As a result, a size that is of buffered data and that is indicated by an index in a BSR reported by a terminal device to a network device is larger. Because when an index is greater in an index table in a current standard, a range of a size that is of buffered data and that is indicated by the index is larger, improper allocation may occur when the network device schedules a resource based on the BSR from the terminal device. For example, an excessive amount of resources may be allocated to the terminal device. Therefore, in the prior art, a new index table with a finer granularity is expected to be introduced to resolve the foregoing problem. However, a definition and a type of the index table are not determined. Therefore, how to determine the index table is a problem to be urgently resolved.

To enable an index to more accurately indicate a buffer size corresponding to a logical channel, an embodiment of this application proposes an information reporting method. Refer to FIG. 9. As shown in FIG. 9, the information reporting method includes the following step 901. An execution body of the method shown in FIG. 9 may be a terminal device, or may be a chip in the terminal device. In FIG. 9, an example in which the execution body of the method is the terminal device is used for description. The execution body of the method is not limited in this embodiment of this application.

901: The terminal device obtains fourth information, where the fourth information indicates a first index table.

In this embodiment of this application, the first index table includes a correspondence between an index and second information. Alternatively, the second information may be a largest value, a smallest value, or an intermediate value in a section in an index table, a length of a section, or a largest value, a smallest value, or an intermediate value in an index table. The fourth information received by the terminal device indicates the first index table, and the terminal device may determine the first index table based on the fourth information. The terminal device needs to determine at least two index tables, and the at least two index tables includes the first index table.

In a possible implementation, the fourth information indicates one or more of the following parameters: a quantity of indexes in the first index table, a largest index in the first index table, a smallest index in the first index table, second information in the first index table, a first range in the first index table, an adjacency ratio in the first index table, and an adjacency difference in the first index table. The adjacency difference is a difference between second information corresponding to two adjacent indexes in an index table. The adjacency ratio is a ratio between second information corresponding to two adjacent indexes in an index table.

The terminal device may determine the first index table based on a first rule in the first index table and the parameter indicated in the fourth information.

The first rule includes a plurality of items below.
1. Adjacency differences in the first index table are the same. In this case, the fourth information indicates an adjacency difference in the first index table. The terminal device may determine the first index table based on the first rule and the adjacency difference indicated in the fourth information.
2. Adjacency ratios in the first index table are the same. In this case, the fourth information indicates an adjacency ratio in the first index table. The terminal device may determine the first index table based on the first rule and the adjacency ratio indicated in the fourth information.
3. The first index table satisfies one or more of the following conditions: a condition 1: an adjacency difference between every two indexes belonging to a first value range in the first index table is equal to a first adjacency difference; a condition 2: an adjacency difference between every two indexes belonging to a second value range in the first index table is equal to a second adjacency difference; a condition 3: an adjacency ratio between every two indexes belonging to a third value range in the first index table is equal to a first adjacency ratio; and a condition 4: an adjacency ratio between every two indexes belonging to a fourth value range in the first index table is equal to a second adjacency ratio. The first adjacency difference is different from the second adjacency difference, and the first adjacency ratio is different from the second adjacency ratio.
   In this case, the fourth information indicates one or more of the adjacency difference, the adjacency ratio, and the first range in the first index table. It needs to be additionally noted that the adjacency difference may be a first adjacency difference and/or a second adjacency difference, and the adjacency ratio may be a first adjacency ratio and/or a second adjacency ratio. The first range may include one or more of a first value range, a second value range, a third value range, and a fourth value range. It needs to be noted that the value range may be an index range in the first index table or a section range of the second information. The terminal device may determine the first index table based on the first rule and the adjacency difference, the adjacency ratio, and the first range in the first index table that are indicated in the fourth information.
4. A smallest index in the first index table is 0. A largest value of second information corresponding to the index 0 is M. M is 0, or M is an integer greater than 0. The fourth information indicates that the smallest index in the first index table corresponds to the largest value M of the second information. The terminal device may determine the first index table based on the first rule and a correspondence between the smallest index and the second information that is indicated by the fourth information.
5. A smallest index in the first index table is N. N is an integer greater than 0. A value range of an index included in the second index table is an integer between 0 and N - 1. In this case, the fourth information indicates the smallest index N in the first index table. The terminal device may determine the first index table based on the first rule and the smallest index that is indicated by the fourth information.

In a possible implementation, the fourth information may be a target parameter. The target parameter indicates one or more of the following parameters: a quantity of indexes in the first index table, a largest index in the first index table, a smallest index in the first index table, second information in the first index table, a first range in the first index table, an adjacency ratio in the first index table, and an adjacency difference in the first index table.

For example, the target parameter is a threshold, and the smallest index in the first index table may be determined based on the threshold. Specifically, the terminal device determines that the smallest index in the first index table is an index value corresponding to second information to which the threshold belongs in the second index table. That the target parameter is a threshold is an example provided in this embodiment of this application. The target parameter may alternatively be another parameter. This is not limited in this embodiment of this application.

In a possible implementation, the terminal device may predefine a plurality of buffer sections, and determine the first index table based on the plurality of predefined buffer sections and the fourth information. A quantity of buffer sections predefined by the terminal device is greater than a quantity of first index tables.

In a possible implementation, the fourth information may be sent by the network device, predefined, or determined by the terminal device by sensing a current network environment or another parameter, or sent by another device. This is not limited in this embodiment of this application.

In a possible implementation, the method further includes: The terminal device determines one or more index tables. When two index tables are determined, the at least two index tables include a first index table and a second index table. It needs to be noted that the first index table and the second index table are merely examples provided in this application. The at least two index tables may alternatively include a third index table and a plurality of index tables. A quantity of index tables is not limited in this embodiment of this application. In the following content, the first index table and the second index table are used as an example. A quantity of index tables included in the at least two index tables is not limited in this embodiment of this application. Optionally, the at least two index tables include an index table that is a table already defined in the current 3GPP R17 standard V17.2.0, for example, Table 1 in the foregoing descriptions.

In a possible implementation, the at least two index tables include the first index table and the second index table. An adjacency difference less than an adjacency difference in the second index table exists in the first index table. Alternatively, an adjacency ratio less than an adjacency ratio in the second index table exists in the first index table. The adjacency difference is a difference between second information corresponding to two adjacent indexes in an index table. The adjacency ratio is a ratio between second information corresponding to two adjacent indexes in an index table. This implementation helps enable an index to more accurately indicate a buffer size corresponding to a logical channel group.

Optionally, when the first index is an index indicated in a BSR, the first granularity is an LCG. The second information may be understood as a largest value, a smallest value, or an intermediate value in a buffer section corresponding to the first index. An example in which the second information is the largest value in the buffer section is used. The adjacency difference may be understood as a difference between largest values in buffer sections corresponding to two adjacent indexes in the index table. In this case, the adjacency difference may alternatively be understood as lengths of the buffer sections corresponding to the two indexes. The adjacency ratio may be understood as a ratio of a largest value in a buffer section corresponding to a second index to a largest value in a buffer section corresponding to a third index in the index table. The second index and the third index are two adjacent indexes in the index table, and a value of the second index is greater than a value of the third index.

Further optionally, the second index table may be a table already defined in the current 3GPP R17 standard V17.2.0, for example, Table 1 in the foregoing descriptions. The first index table is an index table that is newly defined in this embodiment of this application and whose granularity is less than that of the second index table.

Based on the first index table described above, the granularity of the first index table is introduced below. Descriptions of the first index table are the same as the descriptions in step 201. In this embodiment of this application, only brief descriptions are provided. For a specific implementations and example, refer to the descriptions in step 201.

In a possible implementation, adjacency differences in the first index table are the same. The adjacency difference is a difference between second information corresponding to two adjacent indexes in an index table. Optionally, when the second information is a buffer section, the adjacency difference may be understood as a difference between largest values in buffer sections corresponding to two adjacent indexes in the index table. Alternatively, the adjacency difference may be understood as lengths of the buffer sections corresponding to the two indexes.

In another possible implementation, adjacency ratios between second information corresponding to two adjacent indexes in the first index table are the same or a difference between two adjacency ratios is less than a second threshold. The adjacency ratio is a ratio between second information corresponding to two adjacent indexes in an index table. That a difference between two adjacency ratios is less than a second threshold, and the second threshold is close to 0 may be understood as that all the adjacency ratios in the first index table are approximately the same. Optionally, when the second information is a buffer section, the adjacency ratio may be understood as a ratio between largest values in buffer sections corresponding to two adjacent indexes in the index table.

In another possible implementation, adjacency differences belonging to the first value range in the first index table are the same. Adjacency ratios belonging to the second value range in the first index table are the same or a difference between two adjacency ratios is less than a second threshold. Optionally, when the second information is a buffer section, the adjacency difference may be understood as a difference between largest values in buffer sections corresponding to two adjacent indexes in the index table. Alternatively, the adjacency difference may be understood as lengths of the buffer sections corresponding to the two indexes. The adjacency ratio may be understood as a ratio between largest values in buffer sections corresponding to two adjacent indexes in the index table.

Optionally, the first value range includes an index value satisfying a first condition, and the second value range includes an index value that does not satisfy the first condition. It needs to be noted that first condition may be any condition. For example, the first condition is that an index value is greater than a preset threshold. This is not limited in this embodiment of this application.

In another possible implementation, in the first index table, if both pieces of second information corresponding to two adjacent indexes are less than a first threshold, a difference between the second information corresponding to the two adjacent indexes is a first value. If both pieces of the second information corresponding to the two adjacent indexes are greater than or equal to the first threshold, the difference between the second information corresponding to the two adjacent indexes is a second value. It needs to be noted that the first threshold may be configured by the network device or predefined. This is not limited in this embodiment of this application. The first threshold is merely an example in this application, and may include a plurality of thresholds, such as a second threshold. This is not limited in this embodiment of this application.

In another possible implementation, in the first index table, if both pieces of second information corresponding to two adjacent indexes are less than a second threshold, a ratio between the second information corresponding to the two adjacent indexes is a third value. If both pieces of the second information corresponding to the two adjacent indexes are greater than or equal to the second threshold, the ratio between the second information corresponding to the two adjacent indexes is a fourth value. It needs to be noted that the second threshold may be configured by the network device or predefined. This is not limited in this embodiment of this application. The first threshold is merely an example in this application, and may include a plurality of thresholds, such as a third threshold. This is not limited in this embodiment of this application.

Based on the foregoing descriptions of the first index table, the index included in the first index table and the second information are described below. Descriptions of the index and the second information are the same as the descriptions in step 201. In this embodiment of this application, only brief descriptions are provided. For a specific implementations and example, refer to the descriptions in step 201. Details are not described again in this embodiment of this application.

In a possible implementation, a smallest index in the first index table is 0. A largest value of second information corresponding to the index 0 is M. M is 0, or M is an integer greater than 0.

In another possible implementation, a smallest index in the first index table is N. N is an integer greater than 0. A value range of an index included in the second index table is an integer between 0 and N - 1.

A function of the first index table is described below.

In a possible implementation, the method further includes: The terminal device sends a data format to the network device. The data format indicates the first index. The first index corresponds one of at least two index tables, and the at least two index tables include the first index table. The data format may be one of the following formats: MAC CE, an SDU, a PDU, DCI, or RRC signaling. In addition, the data format may alternatively be another format. This is not limited in this embodiment of this application. The first index indicates second information of a first granularity. That the first index corresponds to one of the at least two index tables may be understood as that the first index is an index from one of the at least two index tables. The second information that is indicated by the first index and that is of the first granularity is determined based on the first index and the index table corresponding to the first index. In a possible implementation, the first granularity may be one of the following granularities: an LCH, an LCG, a PDU set, and a Qos Flow. Optionally, the first index is an index indicated in a BSR. Further optionally, the first granularity is an LCG, and the second information is a buffer section. In this implementation, the first index indicates a buffer section corresponding to a size of data buffered in the LCG. The buffer section corresponding to the size of the data buffered in the LCG may be determined based on the first index and the table corresponding to the first index. For a format of the BSR, refer to the descriptions in step 201. Details are not described again in this embodiment of this application.

FIG. 10 is a schematic diagram of a structure of a communication apparatus according to an embodiment of this application. The communication apparatus may be a terminal device or an apparatus (such as a chip) having a function of the terminal device. Specifically, as shown in FIG. 10, the communication apparatus 100 may include a processing unit 1001 and a communication unit 1002. The communication apparatus may perform steps related to the terminal device in the foregoing method embodiments.

In an embodiment:
The processing unit 1001 obtains first information, where the first information indicates a first index or an index table corresponding to the first index, and the first index corresponds to one of at least two index tables. The communication unit 1002 is configured to send, to a network device, a data format indicating the first information.

In a possible implementation, the data format is one of the following formats: a media access control control element MAC CE, a service data unit, a protocol data unit, downlink control information, or radio resource control signaling.

In a possible implementation, the data format includes a buffer status report.

In a possible implementation, the first information indicates a data type or the data format, and the data format indicates the first index.

In a possible implementation, the first information is the first index.

In a possible implementation, the at least two index tables include a first index table and a second index table. If the first information is greater than a first threshold, the first information indicates that the index table corresponding to the first index is the first index table. If the first information is less than or equal to the first threshold, the first information indicates that the index table corresponding to the first index is the second index table. Alternatively, the at least two index tables include a first index table and a second index table. If the first information is greater than or equal to a first threshold, the first information indicates that the index table corresponding to the first index is the first index table. If the first information is less than the first threshold, the first information indicates that the index table corresponding to the first index is the second index table.

In a possible implementation, the index table includes a correspondence between an index and second information. The at least two index tables include the first index table and the second index table. An adjacency difference less than an adjacency difference in the second index table exists in the first index table. Alternatively, an adjacency ratio less than an adjacency ratio in the second index table exists in the first index table. The adjacency difference is a difference between second information corresponding to two adjacent indexes in an index table. The adjacency ratio is a ratio between second information corresponding to two adjacent indexes in an index table.

In a possible implementation, adjacency differences in the first index table are the same.

In a possible implementation, adjacency ratios in the first index table are the same or a difference between two adjacency ratios is less than a second threshold.

In a possible implementation, the first index table satisfies one or more of the following conditions: an adjacency difference between every two indexes belonging to a first value range in the first index table is equal to a first adjacency difference; an adjacency difference between every two indexes belonging to a second value range in the first index table is equal to a second adjacency difference; an adjacency ratio between every two indexes belonging to a third value range in the first index table is equal to a first adjacency ratio; and an adjacency ratio between every two indexes belonging to a fourth value range in the first index table is equal to a second adjacency ratio. The first adjacency difference is different from the second adjacency difference, and the first adjacency ratio is different from the second adjacency ratio.

In a possible implementation, a smallest index in the first index table is 0. A largest value of second information corresponding to the index 0 is M. M is 0, or M is an integer greater than 0.

In a possible implementation, a smallest index in the first index table is N. N is an integer greater than 0. A value range of an index included in the second index table is an integer between 0 and N - 1.

In a possible implementation, the communication unit 1002 is further configured to obtain indication information. The indication information indicates the first index table.

In a possible implementation, the indication information indicates one or more of the following parameters: a quantity of indexes in the first index table, a largest index in the first index table, a smallest index in the first index table, second information in the first index table, a first range in the first index table, an adjacency difference in the first index table, and an adjacency ratio in the first index table.

In a possible implementation, the indication information indicates a smallest index in the first index table. The processing unit 1001 is further configured to determine the first index table based on L preset buffer sections and the smallest index in the first index table. A difference between the smallest index in the first index table and a largest index in the first index table is less than or equal to L. L is an integer greater than 1.

In another embodiment:
The communication unit 1002 obtains third information. The third information indicates an index table that is of a first index and that corresponds to a first granularity, and the index table that is of the first index and that corresponds to the first granularity is from one of at least two index tables.

In a possible implementation, the third information is related to a bitmap.

In a possible implementation, the third information is configuration information related to the first granularity, and an information parameter of the configuration information is an identifier of the first granularity.

In a possible implementation, the index table includes a correspondence between an index and second information. The at least two index tables include the first index table and the second index table. An adjacency difference less than an adjacency difference in the second index table exists in the first index table. Alternatively, an adjacency ratio less than an adjacency ratio in the second index table exists in the first index table. The adjacency difference is a difference between second information corresponding to two adjacent indexes in an index table. The adjacency ratio is a ratio between second information corresponding to two adjacent indexes in an index table.

In a possible implementation, adjacency differences in the first index table are the same.

In a possible implementation, adjacency ratios in the first index table are the same or a difference between two adjacency ratios is less than a second threshold.

In a possible implementation, the first index table satisfies one or more of the following conditions: an adjacency difference between every two indexes belonging to a first value range in the first index table is equal to a first adjacency difference; an adjacency difference between every two indexes belonging to a second value range in the first index table is equal to a second adjacency difference; an adjacency ratio between every two indexes belonging to a third value range in the first index table is equal to a first adjacency ratio; and an adjacency ratio between every two indexes belonging to a fourth value range in the first index table is equal to a second adjacency ratio. The first adjacency difference is different from the second adjacency difference, and the first adjacency ratio is different from the second adjacency ratio.

In a possible implementation, a smallest index in the first index table is 0. A largest value of second information corresponding to the index 0 is M. M is 0, or M is an integer greater than 0.

In a possible implementation, a smallest index in the first index table is N. N is an integer greater than 0. A value range of an index included in the second index table is an integer between 0 and N - 1.

In a possible implementation, the communication unit 1002 is further configured to obtain indication information. The indication information indicates the first index table.

In a possible implementation, the indication information indicates one or more of the following parameters: a quantity of indexes in the first index table, a largest index in the first index table, a smallest index in the first index table, second information in the first index table, a first range in the first index table, an adjacency difference in the first index table, and an adjacency ratio in the first index table.

In a possible implementation, the indication information indicates a smallest index in the first index table. The processing unit 1001 is further configured to determine the first index table based on L preset buffer sections and the smallest index in the first index table. A difference between the smallest index in the first index table and a largest index in the first index table is less than or equal to L. L is an integer greater than 1.

In a possible implementation, the communication unit 1002 is further configured to: if an index table that is of the first index and that corresponds to a target granularity is the first index table, and a target information value of the target granularity is less than or equal to a second threshold, skip currently reporting a data format, and report the data format after the target information value of the target granularity is greater than a third threshold.

In another embodiment:
The processing unit 1001 is configured to obtain fourth information. The fourth information indicates a first index table.

In a possible implementation, the fourth information indicates one or more of the following parameters: a quantity of indexes in the first index table, a largest index in the first index table, a smallest index in the first index table, second information in the first index table, a first range in the first index table, an adjacency difference in the first index table, and an adjacency ratio in the first index table.

In a possible implementation, a terminal device determines one or more index tables. When two index tables are determined, the at least two index tables include the first index table and a second index table. An adjacency difference less than an adjacency difference in the second index table exists in the first index table. Alternatively, an adjacency ratio less than an adjacency ratio in the second index table exists in the first index table. The adjacency difference is a difference between second information corresponding to two adjacent indexes in an index table. The adjacency ratio is a ratio between second information corresponding to two adjacent indexes in an index table.

In a possible implementation, adjacency differences in the first index table are the same.

In a possible implementation, adjacency ratios in the first index table are the same or a difference between two adjacency ratios is less than a second threshold.

In a possible implementation, the first index table satisfies one or more of the following conditions: an adjacency difference between every two indexes belonging to a first value range in the first index table is equal to a first adjacency difference; an adjacency difference between every two indexes belonging to a second value range in the first index table is equal to a second adjacency difference; an adjacency ratio between every two indexes belonging to a third value range in the first index table is equal to a first adjacency ratio; and an adjacency ratio between every two indexes belonging to a fourth value range in the first index table is equal to a second adjacency ratio. The first adjacency difference is different from the second adjacency difference, and the first adjacency ratio is different from the second adjacency ratio.

In a possible implementation, a smallest index in the first index table is 0. A largest value of second information corresponding to the index 0 is M. M is 0, or M is an integer greater than 0.

In a possible implementation, the fourth information is sent from a network device.

FIG. 10 is a schematic diagram of a structure of a communication apparatus according to an embodiment of this application. The communication apparatus may be a network device or an apparatus (such as a chip) having a function of the network device. Specifically, as shown in FIG. 10, the communication apparatus 100 may include a processing unit 1001 and a communication unit 1002. The communication apparatus may perform steps related to the network device in the foregoing method embodiments.

In an embodiment:
The communication unit 1002 is configured to receive a data format that is sent from a terminal device and that indicates first information. The first information indicates a first index or an index table corresponding to the first index, and the first index corresponds to one of at least two index tables.

In a possible implementation, the data format is one of the following formats: a media access control control element MAC CE, a service data unit, a protocol data unit, downlink control information, or radio resource control signaling.

The media access control control element MAC CE is a MAC CE, the service data unit is an SDU, the protocol data unit is a PDU, the downlink control information is DCI, or the radio resource control signaling is RRC signaling.

In a possible implementation, the data format includes a buffer status report.

In a possible implementation, the first information indicates a data type or the data format, and the data format indicates the first index.

In a possible implementation, the first information is the first index.

In a possible implementation, the at least two index tables include a first index table and a second index table. If the first information is greater than a first threshold, the first information indicates that the index table corresponding to the first index is the first index table. If the first information is less than or equal to the first threshold, the first information indicates that the index table corresponding to the first index is the second index table. Alternatively, the at least two index tables include a first index table and a second index table. If the first information is greater than or equal to a first threshold, the first information indicates that the index table corresponding to the first index is the first index table. If the first information is less than the first threshold, the first information indicates that the index table corresponding to the first index is the second index table.

In a possible implementation, the index table includes a correspondence between an index and second information. The at least two index tables include the first index table and the second index table. An adjacency difference less than an adjacency difference in the second index table exists in the first index table. Alternatively, an adjacency ratio less than an adjacency ratio in the second index table exists in the first index table. The adjacency difference is a difference between second information corresponding to two adjacent indexes in an index table. The adjacency ratio is a ratio between second information corresponding to two adjacent indexes in an index table.

In a possible implementation, adjacency differences in the first index table are the same.

In a possible implementation, adjacency ratios in the first index table are the same or a difference between two adjacency ratios is less than a second threshold.

In a possible implementation, the first index table satisfies one or more of the following conditions: an adjacency difference between every two indexes belonging to a first value range in the first index table is equal to a first adjacency difference; an adjacency difference between every two indexes belonging to a second value range in the first index table is equal to a second adjacency difference; an adjacency ratio between every two indexes belonging to a third value range in the first index table is equal to a first adjacency ratio; and an adjacency ratio between every two indexes belonging to a fourth value range in the first index table is equal to a second adjacency ratio. The first adjacency difference is different from the second adjacency difference, and the first adjacency ratio is different from the second adjacency ratio.

In a possible implementation, a smallest index in the first index table is 0. A largest value of second information corresponding to the index 0 is M. M is 0, or M is an integer greater than 0.

In a possible implementation, a smallest index in the first index table is N. N is an integer greater than 0. A value range of an index included in the second index table is an integer between 0 and N - 1.

In a possible implementation, the communication unit 1002 sends indication information to the terminal device. The indication information indicates the first index table.

In a possible implementation, the indication information indicates one or more of the following parameters: a quantity of indexes in the first index table, a largest index in the first index table, a smallest index in the first index table, second information in the first index table, a first range in the first index table, an adjacency difference in the first index table, and an adjacency ratio in the first index table.

In another embodiment:
The communication unit 1002 is configured to send third information to a terminal device. The third information indicates an index table of a first index corresponding to a first granularity, and the index table is from one of at least two index tables.

In a possible implementation, the first granularity is one of the following granularities: a logical channel group, a logical channel, a protocol data unit, and a quality of service flow.

In a possible implementation, the third information is related to a bitmap.

In a possible implementation, the third information is configuration information related to the first granularity, and an information parameter of the configuration information is an identifier of the first granularity.

In a possible implementation, the index table includes a correspondence between an index and second information. The at least two index tables include the first index table and the second index table. An adjacency difference less than an adjacency difference in the second index table exists in the first index table. Alternatively, an adjacency ratio less than an adjacency ratio in the second index table exists in the first index table. The adjacency difference is a difference between second information corresponding to two adjacent indexes in an index table. The adjacency ratio is a ratio between second information corresponding to two adjacent indexes in an index table.

In a possible implementation, adjacency differences in the first index table are the same.

In a possible implementation, adjacency ratios in the first index table are the same or a difference between two adjacency ratios is less than a second threshold.

In a possible implementation, the first index table satisfies one or more of the following conditions: an adjacency difference between every two indexes belonging to a first value range in the first index table is equal to a first adjacency difference; an adjacency difference between every two indexes belonging to a second value range in the first index table is equal to a second adjacency difference; an adjacency ratio between every two indexes belonging to a third value range in the first index table is equal to a first adjacency ratio; and an adjacency ratio between every two indexes belonging to a fourth value range in the first index table is equal to a second adjacency ratio. The first adjacency difference is different from the second adjacency difference, and the first adjacency ratio is different from the second adjacency ratio.

In a possible implementation, a smallest index in the first index table is 0. A largest value of second information corresponding to the index 0 is M. M is 0, or M is an integer greater than 0.

In a possible implementation, a smallest index in the first index table is N. N is an integer greater than 0. A value range of an index included in the second index table is an integer between 0 and N - 1.

In a possible implementation, the communication unit 1002 is further configured to send indication information to the terminal device. The indication information indicates the first index table.

In a possible implementation, the indication information indicates one or more of the following parameters: a quantity of indexes in the first index table, a largest index in the first index table, a smallest index in the first index table, second information in the first index table, a first range in the first index table, an adjacency difference in the first index table, and an adjacency ratio in the first index table.

In another embodiment:
The communication unit 1002 sends fourth information to a terminal device. The fourth information indicates a first index table.

In a possible implementation, the indication information indicates one or more of the following parameters: a quantity of indexes in the first index table, a largest index in the first index table, a smallest index in the first index table, second information in the first index table, a first range in the first index table, an adjacency difference in the first index table, and an adjacency ratio in the first index table.

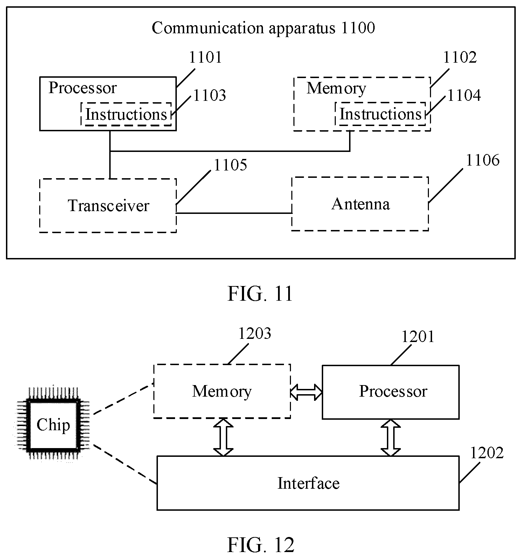

FIG. 11 is a schematic diagram of a structure of a communication apparatus. The communication apparatus 1100 may be the terminal device or the network device in the foregoing method embodiments, or may be a chip, a chip system, a processor, or the like that supports the terminal device or the network device in implementing the foregoing methods. Optionally, the communication apparatus 1100 may alternatively be an entity apparatus corresponding to the communication apparatus described in FIG. 4. The communication apparatus may be configured to implement the methods described in the foregoing method embodiments. For details, refer to the descriptions in the foregoing method embodiments.

The communication apparatus 1100 may include one or more processors 1101. The processor 1101 may be a general-purpose processor, a dedicated processor, or the like. For example, the processor 1101 may be a baseband processor or a central processing unit. The baseband processor may be configured to process a communication protocol and communication data. The central processing unit may be configured to control the communication apparatus (for example, a base station, a baseband chip, a terminal, a terminal chip, a DU, or a CU), to execute a software program, and process data of the software program.

Optionally, the communication apparatus 1100 may include one or more memories 1102, having instructions 1104 stored therein. The instructions may be executed on the processor 1101, to enable the communication apparatus 1100 to perform the methods described in the foregoing method embodiments. Optionally, the memory 1102 may further store data. The processor 1101 and the memory 1102 may be disposed separately or integrated together.

Optionally, the communication apparatus 1100 may further include a transceiver 1105 and an antenna 1106. The transceiver 1105 may be referred to as a transceiver unit, a transceiver machine, a transceiver circuit, or the like, and is configured to implement a transceiver function. The transceiver 1105 may include a receiver and a transmitter. The receiver may be referred to as a receiving machine, a receiving circuit, or the like, and is configured to implement a receiving function. The transmitter may be referred to as a transmitting machine, a transmitting circuit, or the like, and is configured to implement a transmitting function.

The communication apparatus 1100 is a terminal device or a network device. The processor 1101 is configured to perform a data processing operation of the terminal device or the network device in the foregoing method embodiments. The transceiver 1105 is configured to perform a data transceiver operation of the terminal device or the network device in the foregoing method embodiments.

In another possible design, the processor 1101 may include a transceiver configured to implement both a receiving function and a transmitting function. For example, the transceiver may be a transceiver circuit, an interface, or an interface circuit. The transceiver circuit, interface, or interface circuit configured to implement the receiving function and the transmitting function may be separated or integrated together. The transceiver circuit, interface, or interface circuit may be configured to read and write code/data, or the transceiver circuit, interface, or interface circuit may be configured to transmit or transfer a signal.

In another possible design, optionally, the processor 1101 may store instructions 1103. The instructions 1103 are run on the processor 1101, to enable the communication apparatus 1100 to perform the methods described in the foregoing method embodiments. The instructions 1103 may be fixed in the processor 1101. In this case, the processor 1101 may be implemented by hardware.

In another possible design, the communication apparatus 1100 may include a circuit. The circuit may implement a transmitting, receiving, or communication function in the foregoing method embodiments. The processor and the transceiver described in this embodiment of this application may be implemented on an integrated circuit (integrated circuit, IC), an analog IC, a radio frequency integrated circuit RFIC, a mixed signal IC, an application specific integrated circuit (application specific integrated circuit, ASIC), a printed circuit board (printed circuit board, PCB), an electronic device, or the like.

The communication apparatus described in the foregoing embodiment may be a terminal device or a network device, but a scope of the communication apparatus described in this embodiment of this application is not limited thereto, and a structure of the communication apparatus may not be limited by FIG. 11. The communication apparatus may be a stand-alone device or may be part of a larger device. For example, the communication apparatus may be:
(1) a stand-alone integrated circuit IC, a chip, a chip system, or a sub-system;
(2) a set including one or more ICs, where optionally, the IC set may also include a storage component configured to store data or instructions;
(3) an ASIC, such as a modem (MSM);
(4) a module that can be embedded in another device;
(5) a receiver, a terminal, a smart terminal, a cellular phone, a wireless device, a handset, a mobile unit, a vehicle-mounted device, a network device, a cloud device, an artificial intelligent device, or the like; and
(6) others, and the like.

For a case in which the communication apparatus may be a chip or a chip system, refer to a schematic diagram of a structure of a chip shown in FIG. 12. The chip shown in FIG. 12 includes a processor 1201 and an interface 1202. Optionally, the chip may further include a memory 1203. There may be one or more processors 1201 and a plurality of interfaces 1202.

In a design, for a case in which the chip is configured to implement a function of the network device in the embodiments of this application:
The processor 1201 is configured to perform a data processing operation of the network device in the embodiments of this application.

The interface 1202 is configured to receive or output a signal.

In another design, for a case in which the chip is configured to implement a function of the terminal device in the embodiments of this application:
The processor 1201 is configured to perform a data processing operation of the terminal device in the foregoing method embodiments.

The interface 1202 is configured to receive or output a signal.

It may be understood that some optional features in the embodiments of this application may be implemented independently without depending on another feature, such as a currently based solution, to resolve a corresponding technical problem and achieve a corresponding effect in some scenarios, or may be combined with another feature based on a requirement in some scenarios. Correspondingly, the communication apparatus provided in this embodiment of this application may also correspondingly implement the feature or function. Details are not described herein again.

It should be understood that the processor in this embodiment of this application may be an integrated circuit chip having a signal processing capability. During implementation, the steps of the foregoing method embodiment may be implemented by using a hardware integrated logic circuit in the processor or implemented by using instructions in a software form. The processor may be a general-purpose processor, a digital signal processor (digital signal processor, DSP), an application specific integrated circuit (application specific integrated circuit, ASIC), a field programmable gate array (field programmable gate array, FPGA), another programmable logical device, a discrete gate or transistor logical device, or a discrete hardware component.

It can be understood that, the memory in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory involved in the systems and methods described in this specification is intended to include, but is not limited to, these memories and a memory of any other suitable type.

This application further provides a computer-readable medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

All or some of the foregoing embodiments may be implemented by using software, hardware, firmware, or any combination thereof. When the software is used for implementation, implementation may be entirely or partially performed in a form of a computer program product. The computer program product includes one or more computer instructions. When the computer instructions are loaded and executed on a computer, all or some of the procedures or functions according to the embodiments of this application are produced. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server or data center to another website, computer, server or data center in a wired (for example, a coaxial cable, an optical fiber or a digital subscriber line (digital subscriber line, DSL)) or wireless (for example, infrared, wireless or microwave) manner. The computer-readable storage medium may be any usable medium that can be accessed by the computer, or a data storage device, such as a server or a data center in which one or more usable media are integrated. The usable medium may be a magnetic medium (for example, a floppy disk, a hard disk, or a magnetic tape), an optical medium (for example, a digital video disc (digital video disc, DVD)), a semiconductive medium (for example, a solid-state drive (solid state disk, SSD)), or the like.

An embodiment of this application further provides a computer program product. When the computer program product runs on a processor, the method procedures in the foregoing method embodiments are implemented.

The descriptions of the embodiments provided in this application may refer to each other, and the descriptions of the embodiments have their respective focuses. For a part that is not described in detail in an embodiment, reference may be made to related descriptions in other embodiments. For convenience and brevity of description, for example, for the apparatus, the function of the device, and the performed operation that are provided in the embodiments of this application, refer to related descriptions of the method embodiments of this application. The method embodiments and the apparatus embodiments may also be referred to, combined, or quoted with each other.

A person skilled in the art can further understood that, the various illustrative logical blocks (illustrative logical block) and the steps (step) listed in the embodiments of this application may be implemented through electronic hardware, computer software, or a combination of the two. Whether the functions are implemented by using hardware or software depends on particular applications and a design requirement of the entire system. A person skilled in the art can use various methods to implement functions for each particular application. However, such implementations should not be considered as exceeding the protection scope of the embodiments of this application.

This application further provides a computer-readable storage medium, having a computer program stored therein. When the computer-readable storage medium is executed by a computer, a function in any one of the foregoing method embodiments is implemented.

This application further provides a computer program product. When the computer program product is executed by a computer, a function in any one of the foregoing method embodiments is implemented.

All or some of the foregoing embodiments may be implemented by using software, hardware, firmware, or any combination thereof. When the software is used for implementation, implementation may be entirely or partially performed in a form of a computer program product. The computer program product includes one or more computer instructions. When the computer instructions are loaded and executed on a computer, all or some of the procedures or functions according to the embodiments of this application are produced. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server or data center to another website, computer, server or data center in a wired (for example, a coaxial cable, an optical fiber or a digital subscriber line (digital subscriber line, DSL)) or wireless (for example, infrared, wireless or microwave) manner. The computer-readable storage medium may be any usable medium that can be accessed by the computer, or a data storage device, such as a server or a data center in which one or more usable media are integrated. The usable medium may be a magnetic medium (for example, a floppy disk, a hard disk, or a magnetic tape), an optical medium (for example, a digital video disc (digital video disc, DVD)), a semiconductive medium (for example, a solid-state drive (solid state drive, SSD)), or the like.

A person of ordinary skill in the art may understand that various numerical symbols such as "first" or "second" in this application are merely for differentiation for ease of description, and are not intended to limit the scope and sequence of the embodiments of this application.

The correspondences shown in the tables in this application may be configured or predefined. The values of the information in the tables are merely examples, and may be configured as other values. This is not limited in this application. When the correspondence between the information and each parameter, not all correspondences shown in the tables are required to be necessarily configured. For example, the correspondences shown in some rows in the tables of this application may not be configured. For another example, appropriate deformation and adjustment, such as splitting or combination, may be made based on the foregoing tables. Other names that can be understood by the communication apparatus may alternatively be used for the names of the parameters shown in the titles of the foregoing tables, and the values or representation manners of the parameters may alternatively be other values or representation manners that can be understood by the communication apparatus. Another data structures may alternatively be used when the foregoing tables are implemented. For example, an array, a queue, a container, a stack, a linear table, a pointer, a linked list, a tree, a graph, a structure, a class, a heap, a hash table, or a hash table. Predefining in this application may be understood as defining, predefining, storing, pre-storing, pre-negotiating, pre-configuring, curing, or pre-firing.

A person of ordinary skill in the art may be aware that, in combination with the examples described in the embodiments disclosed in this specification, units and algorithm steps may be implemented by electronic hardware or a combination of computer software and electronic hardware. Whether the functions are executed by hardware or software depends on particular applications and design constraint conditions of the technical solutions. A person skilled in the art may implement the described function by using different methods for each particular application, but such implementation should not be considered to go beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the foregoing embodiments, the descriptions of the embodiments have their respective focuses. For a part that is not described in detail in an embodiment, reference may be made to related descriptions in other embodiments.

The foregoing embodiments are merely intended for describing the technical solutions of this application, but not for limiting this application. Although this application is described in detail with reference to the foregoing embodiments, a person of ordinary skill in the art is to understand that they may still make modifications to the technical solutions described in the foregoing embodiments or make equivalent replacements to some or all technical features thereof, without departing from the scope of the technical solutions of the embodiments of this application.

## Claims

1. An information reporting method, wherein the method comprises:
obtaining first information, wherein the first information indicates a first index or an index table corresponding to the first index, and the first index corresponds to one of at least two index tables; and
sending, to a network device, a data format indicating the first information.

2. The method according to claim 1, wherein the data format is one of the following formats: a media access control control element MAC CE, a service data unit, a protocol data unit, downlink control information, or radio resource control signaling.

3. The method according to claim 1 or 2, wherein that the first information indicates a first index comprises: the first information indicates a data type or the data format, and the data format indicates the first index.

4. The method according to claim 1 or 2, wherein the first information is the first index.

5. The method according to claim 1 or 4, wherein the at least two index tables comprise a first index table and a second index table; and if the first information is greater than a first threshold, the index table corresponding to the first index is the first index table, or if the first information is less than or equal to the first threshold, the index table corresponding to the first index is the second index table; or
if the first information is greater than or equal to a first threshold, the index table corresponding to the first index is the first index table, or if the first information is less than the first threshold, the index table corresponding to the first index is the second index table.

6. The method according to any one of claims 1 to 5, wherein the index table comprises a correspondence between an index and second information, the at least two index tables comprise the first index table and the second index table, and an adjacency difference less than an adjacency difference in the second index table exists in the first index table, or an adjacency ratio less than an adjacency ratio in the second index table exists in the first index table, wherein the adjacency difference is a difference between second information corresponding to two adjacent indexes in an index table, and the adjacency ratio is a ratio between second information corresponding to two adjacent indexes in an index table.

7. The method according to claim 5 or 6, wherein adjacency differences in the first index table are the same, and the adjacency difference is a difference between second information corresponding to two adjacent indexes in an index table.

8. The method according to claim 5 or 6, wherein adjacency ratios in the first index table are the same or a difference between two adjacency ratios is less than a second threshold, and the adjacency ratio is a ratio between second information corresponding to two adjacent indexes in an index table.

9. The method according to claim 5 or 6, wherein the first index table satisfies one or more of the following conditions:
an adjacency difference between every two indexes belonging to a first value range in the first index table is equal to a first adjacency difference;
an adjacency difference between every two indexes belonging to a second value range in the first index table is equal to a second adjacency difference;
an adjacency ratio between every two indexes belonging to a third value range in the first index table is equal to a first adjacency ratio; and
an adjacency ratio between every two indexes belonging to a fourth value range in the first index table is equal to a second adjacency ratio, wherein
the first adjacency difference is different from the second adjacency difference, and the first adjacency ratio is different from the second adjacency ratio, wherein the adjacency difference is a difference between second information corresponding to two adjacent indexes in an index table, and the adjacency ratio is a ratio between second information corresponding to two adjacent indexes in an index table.

10. The method according to any one of claims 5 to 9, wherein a smallest index in the first index table is 0, a largest value of second information corresponding to the index 0 is M, and M is 0, or M is an integer greater than 0.

11. The method according to any one of claims 5 to 9, wherein a smallest index in the first index table is N, N is an integer greater than 0, and a value range of an index comprised in the second index table is an integer between 0 and N - 1.

12. The method according to any one of claims 5 to 9, wherein the method further comprises:
obtaining indication information, wherein the indication information indicates the first index table.

13. The method according to claim 12, wherein that the indication information indicates the first index table comprises: the indication information indicates one or more of the following parameters:
a quantity of indexes in the first index table, a largest index in the first index table, a smallest index in the first index table, largest second information in the first index table, smallest second information in the first index table, a first range in the first index table, an adjacency difference in the first index table, and an adjacency ratio in the first index table, wherein the adjacency difference is a difference between second information corresponding to two adjacent indexes in an index table, and the adjacency ratio is a ratio between second information corresponding to two adjacent indexes in an index table.

14. The method according to claim 13, wherein the indication information indicates the smallest index in the first index table, and the method further comprises:
determining the first index table based on L preset buffer sections and the smallest index in the first index table, wherein a difference between the smallest index in the first index table and the largest index in the first index table is less than or equal to L, and L is an integer greater than 1.

15. An information reporting method, wherein the method comprises:
receiving a data format that is sent from a terminal device and that indicates first information, wherein the first information indicates a first index or an index table corresponding to the first index, and the first index corresponds to one of at least two index tables.

16. The method according to claim 15, wherein the method further comprises:
sending indication information to the terminal device, wherein the indication information indicates a first index table.

17. The method according to claim 16, wherein the indication information comprises one or more of the following: a quantity of indexes in the first index table, a largest index in the first index table, a smallest index in the first index table, largest second information in the first index table, smallest second information in the first index table, an adjacency difference in the first index table, and an adjacency ratio in the first index table, wherein the adjacency difference is a difference between second information corresponding to two adjacent indexes in an index table, and the adjacency ratio is a ratio between second information corresponding to two adjacent indexes in an index table.

18. A communication apparatus, wherein the communication apparatus comprises a unit for performing the method according to any one of claims 1 to 14, or the communication apparatus comprises a unit for performing the method according to any one of claims 15 to 17.

19. A communication apparatus, comprising a processor, wherein the processor is configured to execute a computer program or instructions stored in a memory, to implement the method according to any one of claims 1 to 14, or implement the method according to any one of claims 15 to 17.

20. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 14 through a logic circuit or by executing instructions, or the processor is configured to implement the method according to any one of claims 15 to 17 through a logic circuit or by executing instructions.

21. A computer-readable storage medium, wherein the storage medium stores a computer program or instructions, and when the computer program or instructions are executed by a communication apparatus, the method according to any one of claims 1 to 14 is implemented, or the method according to any one of claims 15 to 17 is implemented.
